(19) Europäisches Patentamt
European Patent Office
Office européen des brevets

(11) EP 3 312 207 A1

(12) EUROPÄISCHE PATENTANMELDUNG

(43) Veröffentlichungstag:
**25.04.2018 Patentblatt 2018/17**

(21) Anmeldenummer: **16194873.2**

(22) Anmeldetag: **20.10.2016**

(51) Int Cl.:
*C08G 2/22* (2006.01)
*C08G 2/08* (2006.01)
*C08G 2/38* (2006.01)
*C08G 2/06* (2006.01)
*C08G 18/56* (2006.01)
*C08G 18/76* (2006.01)
*C08G 65/26* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG
51373 Leverkusen (DE)**

(72) Erfinder:
- **MÜLLER, Thomas Ernst
52074 Aachen (DE)**
- **GÜRTLER, Christoph
50735 Köln (DE)**
- **LEITNER, Walter
52074 Aachen (DE)**
- **VOGT, Henning
52066 Aachen (DE)**
- **KRAUTSCHICK, Mario
41836 Hückelhoven (DE)**
- **LEVEN, Matthias
52062 Aachen (DE)**

(74) Vertreter: **Levpat
c/o Covestro AG
Gebäude 4825
51365 Leverkusen (DE)**

# (54) VERFAHREN ZUR HERSTELLUNG VON POLYOXYALKYLEN-OXYMETHYLEN-COPOLYMEREN BEI NIEDRIGEN REAKTIONSTEMPERATUREN

(57) Die vorliegende Erfindung betrifft ein Verfahren zur Herstellung von Polyoxyalkylen-Oxymethylen-Copolymeren, umfassend den Schritt der Polymerisation von Formaldehyd und eines Alkylenoxids in Gegenwart einer Starterverbindung mit Zerewitinoff-aktiven H-Atomen und eines Katalysators, wobei die Polymerisation bei einer Temperatur zwischen ≥ 40 °C und ≤ 90 °C durchgeführt wird. Sie betrifft weiterhin ein hierdurch erhältliches Polyoxyalkylen-Oxymethylen-Copolymer und ein hiermit herstellbares Polyurethan.

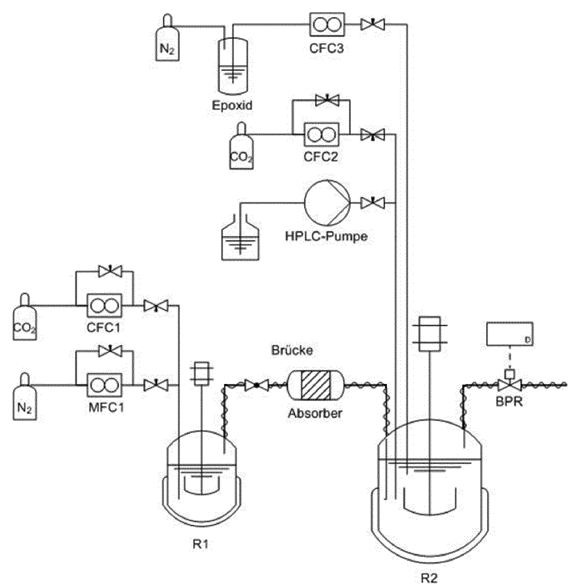


FIG. 1



Printed by Jouve, 75001 PARIS (FR)

## Beschreibung

Die vorliegende Erfindung betrifft ein Verfahren zur Herstellung von Polyoxyalkylen-Oxymethylen-Copolymeren, umfassend den Schritt der Polymerisation von Formaldehyd und eines Alkylenoxids in Gegenwart einer Starterverbindung mit Zerewitinoff-aktiven H-Atomen und eines Katalysators, wobei die Polymerisation bei einer geringeren als sonst üblichen Reaktionstemperatur durchgeführt wird. Sie betrifft weiterhin ein hierdurch erhältliches Polyoxyalkylen-Oxymethylen-Copolymer und ein hiermit herstellbares Polyurethan.

Zum gegenwärtigen Zeitpunkt werden weltweit über 11 Millionen Tonnen Polyurethan pro Jahr produziert. Unter dem Aspekt einer nachhaltigeren Produktionsweise ist der Einsatz von zumindest teilweise aus nachwachsenden Rohstoffquellen stammenden Polyolen als Polyurethan-Rohstoffe erstrebenswert. Als $C_1$-Bausteine kommen insbesondere $CO_2$ und Formaldehyd in Frage. Diese sind nicht an die Verfügbarkeit von Erdöl gebunden und zudem auch noch preiswert.

Formaldehyd lässt sich zu oligomeren oder polymeren Oxymethylen-Ketten (POM) polymerisieren. Werden polymere Polyole als Starter verwendet, erhält man hierdurch Oxymethylen-Block-Copolymere. Als Quellen für Formaldehyd dienen in der Regel gasförmiges Formaldehyd (monomer), Paraformaldehyd (polymer) und Trioxan (trimer). Die Reaktionsbedingungen der Polymerisation haben auch einen großen Einfluss auf die Struktur der so erhaltenen Block-Copolymere: die anionische Polymerisation von gasförmigem Formaldehyd in Gegenwart eines beispielsweise difunktionellen Starter-Polyols führt zu einer Triblock-Struktur, in der das Starter-Polyol zwei POM-Ketten trägt, welche den Abschluss des Block-Copolymers bilden.

Wenn Formaldehyd in Gegenwart eines polymeren Polyols polymerisiert wird, lassen sich Block-Copolymere erhalten. Gegenüber Oxymethylen-Homopolymeren gleichen Molekulargewichts ist die Teilkristallinität in solchen Block-Copolymeren typischerweise herabgesetzt, was üblicherweise ebenfalls zu einer Herabsetzung von Schmelzpunkten und Viskositäten führt. Auch die Glasübergangstemperatur ist häufig herabgesetzt. Die Anwesenheit von zusätzlichen, aus einem weiteren Comonomer stammenden Oligomer-Blöcken führt weiterhin typischerweise zu einer Erhöhung der chemischen und thermischen Stabilität.

WO 2014/095679 A1 beschreibt ein Verfahren zur Herstellung von NCO-modifizierten Oxymethylen-Copolymeren, umfassend den Schritt der Polymerisation von Formaldehyd in Gegenwart eines Katalysators, wobei die Polymerisation von Formaldehyd weiterhin in Gegenwart einer Starterverbindung mit mindestens 2 Zerewitinoff-aktiven H-Atomen erfolgt, wobei ein Zwischenprodukt erhalten wird und das erhaltene Zwischenprodukt mit einem Isocyanat umgesetzt wird, wobei ein NCO-modifiziertes Oxymethylen-Copolymer erhalten wird. Es werden Polyisocyanate als mögliche Reagenzien zur NCO-Modifizierung genannt.

WO 2014/095861 A2 offenbart ein Verfahren zur Herstellung von nicht-alternierenden Formaldehyd/$CO_2$-Copolymere umfassend den Schritt der Reaktion von Formaldehyd oder einer Formaldehyd freisetzenden Verbindung mit Kohlendioxid in Gegenwart eines Katalysatorsystems, dadurch gekennzeichnet, dass das Katalysatorsystem eine Lewis-saure Komponente und eine basische Komponente umfasst, wobei die Lewis-saure Komponente unter Reaktionsbedingungen zumindest zeitweise koordinativ ungesättigt ist und wobei die basische Komponente einen $pK_b$-Wert von > 0 aufweist. Die Lewis-saure Komponente kann ein Metall ausgewählt aus der Gruppe Bor, Zinn, Zink. Kupfer, Bismut, Molybdän, Wolfram und/oder Vanadium sein. Die basische Komponente kann aus der Gruppe Alkalicarbonate, Alkalicarboxylate, 1,4-Diazabicyclo[2.2.2]octan (DABCO), 4-(Dimethylamino)-pyridin (DMAP), 1,8-Diazabicyclo[5.4.0]undec-7-en (DBU), Triazabicyclo[4.4.0]dec-5-ene (TBD), 7-Methyl-1,5,7-triazabicycio[4.4.0]dec-5-en (MTBD), 2,6-Lutidin, N-heterocyclische Carbene und/oder Trimesitylphosphin sein.

Unter dem Gesichtspunkt der Nachhaltigkeit ist ein möglichst hoher relativer Anteil von Formaldehyd in Polymeren erstrebenswert. Die vorliegende Erfindung hat sich daher die Aufgabe gestellt, ein Verfahren zur Herstellung von vorzugsweise statistischen Oxymethylen-Copolymeren bereitzustellen, in denen das Verhältnis von eingebautem Formaldehyd zu eingebautem Alkylenoxid möglichst hoch ist und welche gleichzeitig eine möglichst niedrige Viskosität aufweisen.

Erfindungsgemäß gelöst wurde die Aufgabe durch ein Verfahren zur Herstellung von Polyoxyalkylen-Oxymethylen-Copolymeren, umfassend den Schritt der Polymerisation von Formaldehyd und eines Alkylenoxids in Gegenwart einer Starterverbindung mit Zerewitinoffaktiven H-Atomen und eines Katalysators, wobei die Polymerisation bei einer Temperatur zwischen $\geq 40$ °C und $\leq 90$ °C durchgeführt wird.

Im Sinne der vorliegenden Erfindung sind unter Oxymethylenpolyolen sowohl Oxymethylenpolyole mit einer Oxymethyleneinheit als auch Polyoxymethylenpolyole mit mindestens zwei direkt aufeinander folgenden Oxymethyleneinheiten zu verstehen.

Im Sinne der vorliegenden Erfindung sind unter Copolymeren Polymere zu verstehen, die mindestens einen Block (A) umfassend Oxymethyleneinheiten und Oxyalkyleneinheiten ungleich der Oxymethyleneinheiten sowie einen weiteren Block (B) umfassend einer Starterverbindung enthalten. In einer bevorzugten Ausführungsform sind Oxymethyleneinheiten und die Oxyalkyleneinheiten ungleich der Oxymethyleneinheiten statistisch im Block (A) verteilt.

Geeignete Alkylenoxide sind insbesondere Ethylenoxid, Propylenoxid und/oder Styroloxid.

Bevorzugt ist eine Temperatur für die Polymerisation von ≥ 40 °C bis ≤ 80 °C.

Beim Eintragen des Formaldehyds in das Reaktionsgefäß werden Formaldehyd und das Alkylenoxid auf die Starterverbindung aufpolymerisiert. Hierbei wurde überraschenderweise gefunden, dass in dem Temperaturfenster von ≥ 40 °C bis ≤ 90 °C die Polymerisation des Alkylenoxids bereits einsetzt, ohne dass eine Depolymerisation von aus Formaldehyd stammenden Oxymethylengruppen zu beobachten ist.

Oxymethylen-Homopolymere sind typischerweise auf eine Funktionalität F ≤ 2 beschränkt. Über den Einsatz von Starterverbindungen mit einer Funktionalität F ≥ 2 (beispielsweise ≥ 3) ist im Gegensatz dazu der Zugang zu Copolymeren mit einer Funktionalität F ≥ 2 möglich.

Gegenüber Polyetherpolyolen gleichen Molekulargewichts ist der Anteil an Polyoxyalkylen-Einheiten, die aus den entsprechenden Alkylenoxiden hergestellt werden, um den Oxymethylen-Anteil verringert, was zu einer vorteilhaften Energiebilanz des Produktes führt. Physikalische Eigenschaften wie Schmelzbereiche und Viskositäten sowie Glasübergangstemperaturen können für ein gegebenes Molekulargewicht über den Anteil von Formaldehyd zu Alkylenoxid gezielt angesteuert werden.

Geeignete Katalysatoren sind insbesondere Lewis-saure Katalysatoren, die als Lewis-saures Zentrum ein oder mehrere Zinn-, Bismut-, Vanadium- oder Molybdänatome enthalten, wie z.B. Dibutylzinndilaurat (DBTL), Dibutylzinnoxid, Bismuttris(2-ethylhexanoat), Bismut(III)-triflat, Lithiumorthovanadat oder Lithiummolybdat.

Der Katalysator wird üblicherweise im molaren Verhältnis 1:10 000 bis 10:1, bevorzugt 1:1 000 bis 1:1, besonders bevorzugt 1:1 000 bis 1:10 zu den in der Starterverbindung enthaltenen funktionellen Gruppen eingesetzt.

Formaldehyd kann in gasförmigem Zustand, ggf. als Mischung mit Inertgasen wie z.B. Stickstoff oder Argon oder als Mischung mit gasförmigem, überkritischem oder flüssigem Kohlendioxid, oder als Formaldehyd-Lösung eingesetzt werden. Bei Formaldehyd-Lösungen kann es sich um wässrige Formaldehyd-Lösungen mit einem Formaldehyd-Gehalt zwischen 1 Gewichts-% und 37 Gew.% handeln, die gegebenenfalls bis zu 15 Gew.% Methanol als Stabilisator enthalten können. Alternativ können Lösungen von Formaldehyd in polaren organischen Lösungsmitteln wie z.B. Methanol oder höheren ein- oder mehrwertigen Alkoholen, 1,4-Dioxan, Acetonitril, N,N-Dimethylformamid (DMF), N,N-Dimethylacetamid, Dimethylsulfoxid (DMSO), zyklischen Carbonaten, z.B. Ethylencarbonat oder Propylencarbonat, N-Methylpyrrolidon (NMP), Sulfolan, Tetramethylharnstoff, N,N'-Dimethylethylenharnstoff oder Mischungen derselben untereinander, mit Wasser und/oder anderen Lösungsmitteln eingesetzt werden. Die Anwesenheit weiterer Substanzen in Lösung ist ebenfalls mit eingeschlossen. Bevorzugt ist der Einsatz von Gemischen von gasförmigem Formaldehyd mit Argon oder Kohlendioxid. Ebenfalls bevorzugt ist der Einsatz von Lösungen von Formaldehyd in aprotischen polaren organischen Lösungsmitteln wie z.B. 1,4-Dioxan, Acetonitril, N,N-Dimethylformamid (DMF), N,N-Dimethylacetamid, Dimethylsulfoxid (DMSO), zyklischen Carbonaten, z.B. Ethylencarbonat oder Propylencarbonat, N-Methylpyrrolidon (NMP), Sulfolan, Tetramethylharnstoff, N,N'-Dimethylethylenharnstoff oder Mischungen derselben untereinander, und/oder anderen Lösungsmitteln.

Alternativ kann Formaldehyd *in situ* aus einer geeigneten Formaldehyd-Quelle generiert werden. Als Formaldehyd-Quelle können Substanzen zum Einsatz kommen, welche chemisch gebundenen Formaldehyd, üblicherweise in Form von Oxymethylen-Gruppen, enthalten, und die unter geeigneten Bedingungen in der Lage sind, Formaldehyd freizusetzen. Geeignete Bedingungen für die Freisetzung können z.B. erhöhte Temperaturen und/oder den Einsatz von Katalysatoren und/oder die Gegenwart von Säuren, Basen oder anderen Reagenzien, die zu der Freisetzung von monomerem Formaldehyd führen, beinhalten. Bevorzugte Formaldehyd-Quellen sind 1,3,5-Trioxan, Paraformaldehyd, Polyoxymethylen, Dimethylacetal, 1,3-Dioxolan, 1,3-Dioxan und/oder 1,3-Dioxepan, besonders bevorzugt sind 1,3,5-Trioxan und Paraformaldehyd.

Bei den Starterverbindungen handelt es sich im Sinne der Erfindung um bi- oder höherfunktionelle Verbindungen mit einem zahlenmittleren Molekulargewicht $M_n$ von beispielsweise zwischen 100 und 3 000 g/mol. Die Funktionalität wird über terminale oder entlang der Polymerkette angeordnete, Heteroatome enthaltende, deprotonierbare funktionelle Gruppen wie beispielsweise Hydroxygruppen, Thiolgruppen, Aminogruppen, Carbonsäuregruppen oder Carbonsäurederivate wie z.B. Amide hergestellt. An N, O oder S gebundener Wasserstoff wird als Zerewitinoff-aktiver Wasserstoff (oder als "aktiver Wasserstoff") bezeichnet, wenn er nach einem von Zerewitinoff aufgefundenen Verfahren durch Umsetzung mit Methylmagnesiumiodid Methan liefert. Die Starterverbindungen haben typischerweise eine Funktionalität ≥ 2, beispielsweise in einem Bereich von ≥ 2 bis ≤ 6, vorzugsweise von ≥ 2 bis ≤ 4 und besonders bevorzugt von ≥ 2 bis ≤ 3.

Es ist bevorzugt, dass das erfindungsgemäße Verfahren in Substanz, also ohne zusätzliches Lösungsmittel, durchgeführt wird. Wird doch der Einsatz eines Lösungsmittels gewählt, können beispielsweise Wasser, Methanol oder höhere ein- oder mehrwertige Alkohole, unpolare organische Lösungsmittel wie z.B. lineare oder verzweigte Alkane oder Alkan-Gemische, Toluol, die verschiedenen Xylol-Isomere oder Gemische derselben, Mesitylen, ein oder mehrfach halogenierte Aromaten oder Alkane, offenkettige oder zyklische Ether wie z.B. Tetrahydrofuran (THF) oder Methyl-*tert*-butylether (MTBE), offenkettige oder zyklische Ester, oder polare aprotische Lösungsmittel wie z.B. 1,4-Dioxan, Acetonitril, *N*,*N*-Dimethylformamid (DMF), *N*,*N*-Dimethylacetamid, Dimethylsulfoxid (DMSO), zyklische Carbonate, z.B. Ethylencarbonat oder Propylencarbonat, *N*-Methylpyrrolidon (NMP), Sulfolan, Tetramethylharnstoff, *N*,*N*'-Dimethylethylenharnstoff oder Mischungen derselben untereinander, mit Wasser und/oder anderen Lösungsmitteln eingesetzt werden. Auch der Einsatz von flüssigem oder überkritischem Kohlendioxid als Lösungsmittel in Reinsubstanz oder als Gemisch mit einem der oben genannten Lösungsmittel ist möglich. Bevorzugt sind offenkettige oder zyklische Ether wie z.B. Tetrahydrofuran (THF) oder Methyl-tert-butylether (MTBE), offenkettige oder zyklische Ester, polare aprotische Lösungsmittel wie z.B. 1,4-Dioxan, Acetonitril, *N,N*-Dimethylformamid (DMF), *N,N*-Dimethylacetamid, Dimethylsulfoxid (DMSO), zyklische Carbonate, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander und/oder anderen Lösungsmitteln sowie flüssiges oder überkritisches Kohlendioxid.

Die Reaktion kann im Batch-Verfahren, im Semi-Batch-Verfahren oder im kontinuierlichen Verfahren durchgeführt werden. Im bevorzugten Semi-Batch-Verfahren wird ein Gemisch aus Starter, Katalysator und ggf. einem Lösungsmittel vorgelegt und Formaldehyd bzw. die Formaldehyd-Quelle in Reinsubstanz als Gas oder Flüssigkeit oder in Lösung der Reaktion zudosiert.

Der Druck während der Polymerisation von Formaldehyd in Anwesenheit der Starterverbindung und des Alkylenoxids beträgt in der Regel 1 bis 200 bar. Bei der Verwendung von gasförmigem Formaldehyd beträgt der Druck bevorzugt 5 bis 100 bar, besonders bevorzugt 10 bis 50 bar. Bei der Verwendung von $CO_2$ als Comonomer beträgt der Druck bevorzugt 5 bis 100 bar, besonders bevorzugt 10 bis 50 bar.

Die Reaktionszeit für die Polymerisation beträgt beispielsweise 0,05 bis 120 Stunden, bevorzugt 0,5 bis 48 Stunden, besonders bevorzugt 1 bis 24 Stunden. Als Reaktionszeit wird die Zeitspanne betrachtet, während der sich Katalysator, Formaldehyd, Alkylenoxid und Starterverbindung bei Reaktionstemperatur in direktem Kontakt befinden. Insbesondere bei der Durchführung im Semi-Batch-Verfahren, wie z.B. beim Einleiten von gasförmigem Formaldehyd in die Reaktionsmischung, richtet sich die Reaktionszeit nach der Menge des zudosierten Formaldehyds bzw. der zudosierten Formaldehyd-Äquivalente.

Das bei der Herstellung der Copolymere erhaltene Produktgemisch kann ohne weitere Aufreinigungsschritte in der Reaktion mit Isocyanaten zu Polyurethanen eingesetzt werden. Die weitere Umsetzung kann direkt in dem vorliegenden Reaktor (*in situ*) oder in einem zweiten Reaktor ohne vorherige Isolierung der Oxymethylen-Copolymere erfolgen. Alternativ kann das Reaktionsgemisch zeitlich versetzt, z.B. nach Umfüllen oder Lagerung, für die weitere Umsetzung verwendet werden. Bevorzugt werden für die weitere Umsetzung Produktgemische eingesetzt, bei denen die Oxymethylen-Copolymere in Abwesenheit von Lösungsmitteln erhalten wurden.

Werden im erfindungsgemäßen Verfahren wässrige Lösungen eingesetzt, so ist es bevorzugt, wenn das Lösungswasser in einem der Isocyanat-Reaktion vorgeschalteten Schritt, beispielweise durch einen Strippschritt, abgetrennt wird. Vorzugsweise wird das erfindungsgemäße Verfahren allerdings in der Abwesenheit von wässrigen Reagenzien durchgeführt, so dass kein zusätzlicher Schritt zur Abtrennung des Lösungswassers erforderlich ist.

Bei der Herstellung der erfindungsgemäßen Copolymere in Anwesenheit von Lösungsmitteln kann vor der weiteren Umsetzung eine Entfernung der flüchtigen Komponenten, z.B. durch Vakuumdestillation oder Dünnschichtverdampfung, erfolgen. Zusätzliche Reinigungsschritte wie z.B. Extraktion, Fällung und/oder Filtration, z.B. zum Entfernen des Katalysators, sind ebenfalls eingeschlossen.

Der Druck während der Polymerisation von Formaldehyd in Anwesenheit der Starterverbindung und gegebenenfalls zusätzlichen Comonomeren, wie beispielsweise $CO_2$, beträgt 1 bis 200 bar. Bei der Verwendung von gasförmigem Formaldehyd beträgt der Druck bevorzugt 5 bis 100 bar, besonders bevorzugt 10 bis 50 bar.

Die Reaktionszeit für die Polymerisation beträgt beispielsweise 0,05 bis 120 Stunden, bevorzugt 0,5 bis 48 Stunden, besonders bevorzugt 1 bis 24 Stunden. Als Reaktionszeit wird die Zeitspanne betrachtet, während der sich Katalysator, Formaldehyd und Starterverbindung bei Reaktionstemperatur in direktem Kontakt befinden. Insbesondere bei der Durchführung im Semi-Batch-Verfahren, wie z.B. beim Einleiten von gasförmigem Formaldehyd in die Reaktionsmischung, richtet sich die Reaktionszeit nach der Menge des zudosierten Formaldehyds bzw. der zudosierten Formaldehyd-Äquivalente.

Das bei der Herstellung der Oxymethylen-Copolymere erhaltene Produktgemisch kann ohne weitere Aufreinigungsschritte in der Reaktion mit Isocyanaten zu Polyurethanen eingesetzt werden. Die weitere Umsetzung kann direkt in dem vorliegenden Reaktor (*in situ*) oder in einem zweiten Reaktor ohne vorherige Isolierung der Oxymethylen-Copolymere erfolgen. Alternativ kann das Reaktionsgemisch zeitlich versetzt, z.B. nach Umfüllen oder Lagerung, für die weitere Umsetzung verwendet werden. Bevorzugt werden für die weitere Umsetzung Produktgemische eingesetzt, bei denen die Oxymethylen-Copolymere in Abwesenheit von Lösungsmitteln erhalten wurden.

Werden im erfindungsgemäßen Verfahren wässrige Lösungen eingesetzt, so ist es bevorzugt, wenn das Lösungswasser in einem der Isocyanat-Reaktion vorgeschalteten Schritt, beispielweise durch einen Strippschritt, abgetrennt wird. Vorzugsweise wird das erfindungsgemäße Verfahren allerdings in der Abwesenheit von wässrigen Reagenzien durchgeführt, so dass kein zusätzlicher Schritt zur Abtrennung des Lösungswassers erforderlich ist.

Bei der Herstellung der erfindungsgemäßen niedermolekularen Oxymethylen-Copolymere in Anwesenheit von Lösungsmitteln kann vor der weiteren Umsetzung eine Entfernung der flüchtigen Komponenten, z.B. durch Vakuumdestillation oder Dünnschichtverdampfung, erfolgen. Zusätzliche Reinigungsschritte wie z.B. Extraktion, Fällung und/oder Filtration, z.B. zum Entfernen des Katalysators, sind ebenfalls eingeschlossen.

Ausführungsformen des erfindungsgemäßen Verfahrens werden nachfolgend beschrieben. Sie können beliebig miteinander kombiniert werden, sofern sich aus dem Kontext nicht eindeutig das Gegenteil ergibt.

Das erhaltene Copolymer weist beispielsweise ein zahlenmittleres Molekulargewicht $M_n$ von < 4500 g/mol, bevorzugt ≤ 3500 g/mol, und besonders bevorzugt ≤ 3000 g/mol auf. Das Molekulargewicht kann mittels Gelpermeationschromatographie gegen Polypropylenglykol-Standards oder über die OH-Zahl bestimmt werden. Vorzugsweise beträgt das zahlenmittlere Molekulargewicht $M_n$ des Copolymers ≥ 92 g/mol bis < 4500 g/mol, besonders bevorzugt ≥ 500 g/mol bis < 4500 g/mol, mehr bevorzugt ≥ 600 g/mol bis ≤ 3500 g/mol und ganz besonders bevorzugt > 600 g/mol bis ≤ 3000 g/mol.

Die Einstellung des Molekulargewichts auf einen Wert < 4500 g/mol erfolgt zweckmäßigerweise über die Stöchiometrie der Einsatzstoffe. So wird die Summe der molaren Mengen n; aller in das erfindungsgemäße Copolymer eingeführten Monomere i, also der Summe der molaren Menge $n_{FA}$ von Formaldehyd bzw. von den in der Formaldehyd-Quelle enthaltenen Formaldehyd-Äquivalenten und der molaren Mengen der Alkylenoxid-Co-Monomere so gewählt, dass

$$M_{Starter} + \frac{\sum_i n_i \times M_i}{n_{Starter}} < 4500\ \mathrm{g/mol}$$

beträgt, wobei $n_{Starter}$ der molaren Menge und $M_{Starter}$ dem zahlenmittleren Molekulargewicht der Starterverbindung entspricht, sowie $M_i$ dem Molekulargewicht des jeweiligen Monomers i.

Ausführungsformen des erfindungsgemäßen Verfahrens werden nachfolgend beschrieben. Sie können beliebig miteinander kombiniert werden, sofern sich aus dem Kontext nicht eindeutig das Gegenteil ergibt.

Das erhaltene Polyoxyalkylen-Oxymethylen-Copolymer weist ein zahlenmittleres Molekulargewicht $M_n$ von < 4500 g/mol, bevorzugt ≤ 3500 g/mol, und besonders bevorzugt ≤ 3000 g/mol auf. Das Molekulargewicht kann mittels Gelpermeationschromatographie gegen Polypropylenglykol-Standards oder über die OH-Zahl bestimmt werden. Vorzugsweise beträgt das zahlenmittlere Molekulargewicht $M_n$ des Zwischenprodukts > 92 g/mol bis < 4500 g/mol, besonders bevorzugt ≥ 500 g/mol bis < 4500 g/mol, mehr bevorzugt ≥ 600 g/mol bis ≤ 3500 g/mol und ganz besonders bevorzugt ≥ 600 g/mol bis ≤ 3000 g/mol.

Die Einstellung des Molekulargewichts auf einen Wert < 4500 g/mol erfolgt zweckmäßigerweise über die Stöchiometrie der Einsatzstoffe. So wird die Summe der molaren Mengen n; aller in das erfindungsgemäße Oxymethylen-Copolymer eingeführten Monomere i, also der Summe der molaren Menge $n_{FA}$ von Formaldehyd bzw. von den in der Formaldehyd-Quelle enthaltenen Formaldehyd-Äquivalenten und der molaren Mengen der zusätzlichen Co-Monomere so gewählt, dass

$$M_{Starter} + \frac{\sum_i n_i \times M_i}{n_{Starter}} < 4500\ \mathrm{g/mol} \qquad \text{(Gleichung I)}$$

beträgt, wobei $n_{Starter}$ der molaren Menge und $M_{Starter}$ dem zahlenmittleren Molekulargewicht der Starterverbindung entspricht, sowie $M_i$ dem Molekulargewicht des jeweiligen Monomers i.

Ausführungsformen und weitere Aspekte der vorliegenden Erfindung werden nachfolgend geschildert. Sie können beliebig miteinander kombiniert werden, sofern sich aus dem Kontext nicht eindeutig das Gegenteil ergibt.

In einer Ausführungsform des erfindungsgemäßen Verfahrens umfasst der Katalysator eine Zinnhaltige Verbindung, eine Bismut-haltige Verbindung und/oder einen DoppelmetallcyanidKatalysator.. Bevorzugt sind Dibutylzinndilaurat, Dibutylzinnoxid, Bismut(III)-triflat ($Bi(CF_3SO_3)_3$), Bismut(III)-mesylat ($Bi(CH_3SO_3)_3$), Bismut(III)-tosylat ($Bi(CH_3\text{-}C_6H_4\text{-}SO_3)_3$) und/oder Bismut-tri(2-ethylhexanoat). Bevorzugte werden als Doppelmetallcyanidkatalysatoren Verbindungen eingesetzt, die aus der Homopolymerisation von Alkylenoxiden bekannt sind (siehe z.B. US-A 3 404 109, US-A 3 829 505, US-A 3 941 849 und US-A 5 158 922). Doppelmetallcyanidkatalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht größer als 500 g/mol enthalten.

In einer weiteren Ausführungsform des erfindungsgemäßen Verfahrens wird als Katalysator eine Bismut-haltige Verbindung, eine Mischung aus einer einer Bismut-haltigen Verbindung und einer Zinn-haltigen Verbindung oder eine

Mischung aus einer Zinn-haltigen Verbindung und einem Doppelmetallcyanidkatalysator eingesetzt... Bevorzugt sind die folgenden Kombinationen: Dibutylzinndilaurat und Bismuttriflat, Dibutylzinndilaurat und Bismut(III)-tris(2-ethylhexanoat) sowie Dibutylzinndilaurat und Zink-hexacyanocobaltat(III).

In einer weiteren Ausführungsform des erfindungsgemäßen Verfahrens wird als Alkylenoxid Ethylenoxid, Propylenoxid und/oder Styroloxid eingesetzt.

In einer weiteren Ausführungsform des erfindungsgemäßen Verfahrens wird das Formaldehyd zusammen mit Kohlendioxid mit einem $CO_2$-Partialdruck von ≥ 1 bar bis ≤ 50 bar in das Reaktionsgemisch dosiert. Der $CO_2$-Partialdruck beträgt vorzugsweise ≥ 10 bar bis ≤ 30 bar. Bei solchen Partialdrücken wird $CO_2$ nicht oder nur in bedeutungsloser Menge in die wachsende Polymerkette eingebaut. Vorzugsweise ist der Gehalt an eingebautem $CO_2$ kleiner als 0.5 Gewichts-% bezogen auf den neu aufgebauten Polyoxyalkylen-Oxymethylen-Polymerblock. Jedoch scheint es, ohne auf eine Theorie beschränkt zu sein, zu einer temporären Stabilisierung der Formaldehydblöcke während des Kettenwachstums als Kohlensäurehalbester zu kommen. Dieses wird beispielhaft in dem nachfolgenden Schema verdeutlicht:

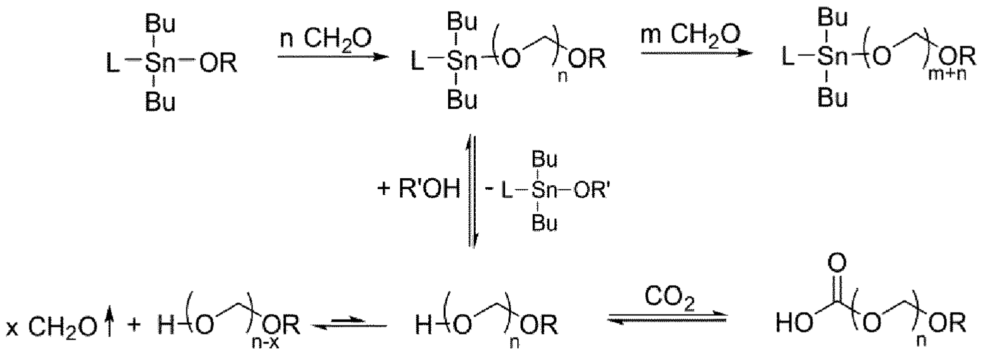


Beispielsweise bei Verwendung von Doppelmetallcyanid-Verbindungen als Katalysator oder Katalysatorkombinationen enthaltend Doppelmetallcyanid-Verbindungen können auch signifikante Mengen an $CO_2$ als Carbonatgruppen in die Polymerkette eingebaut werden. Vorzugsweise liegt der Gehalt an eingebautem $CO_2$ im Bereich von > 0.5 Gewichts-% bis < 20 Gewichts-%, besonders bevorzugt > 0.5 Gewichts-% bis < 10 Gewichts-% bezogen auf den neu aufgebauten Polyoxylalkylen-Oxymethylen-Polymerblock.

In einer weiteren Ausführungsform des erfindungsgemäßen Verfahrens wird nach Ablauf einer vorbestimmten Reaktionsdauer eine wässrige Lösung eines Thiosulfat-Salzes hinzugefügt.

In einer weiteren Ausführungsform des erfindungsgemäßen Verfahrens weist die Starterverbindung ein zahlenmittleres Molekulargewicht von ≥ 76 g/mol bis ≤ 3000 g/mol auf.

In einer weiteren Ausführungsform des erfindungsgemäßen Verfahrens ist die Starterverbindung ausgewählt aus der Gruppe der Polyetherpolyole, Polyethercarbonatpolyole, Polyesterpolyole, Polyetheresterpolyole, Polycarbonatpolyole und/oder Polyacrylatpolyole.

Die Polyole können beispielsweise ein zahlenmittleres Molekulargewicht $M_n$ von ≥ 62 g/mol bis ≤ 8000 g/mol, bevorzugt von ≥ 90 g/mol bis ≤ 5000 g/mol und besonders bevorzugt von ≥ 92 g/mol bis ≤ 2000 g/mol aufweisen.

Die durchschnittliche OH-Funktionalität der Polyole ist ≥ 2, beispielsweise in einem Bereich von ≥ 2 bis ≤ 6, vorzugsweise von ≥ 2,0 bis ≤ 4 und besonders bevorzugt von ≥ 2,0 bis ≤ 3.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Starterverbindungen.

Geeignete Starterverbindungen für die Polyetherpolyole sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols > 2 ist, können zusätzlich auch Monocarbonsäuren wie beispielsweise Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von weiteren Starterverbindungen wie beispielsweise mehrwertigen Alkoholen erhält. Die weiteren Starterverbindungen sind mindestens difunktionell, können aber gegebenenfalls auch Anteile höherfunktioneller insbesondere trifunktioneller weiteren Starterverbindungen enthalten.

Weitere Starterverbindungen für diese Polyetherpolyole sind zum Beispiel Diole mit zahlenmittleren Molekulargewichten $M_n$ von vorzugsweise ≥ 18 g/mol bis ≤ 400 g/mol oder von > 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropylmethacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

In einer weiteren Ausführungsform des erfindungsgemäßen Verfahrens wird das Formaldehyd als gasförmiges Formaldehyd in das Reaktionsgefäß eingetragen. Überraschend wurde gefunden, dass bei der Verwendung von gasförmigem Formaldehyd NCO-modifizierte Oxymethylen-Copolymere mit einem besonders geringen Gehalt an Nebenprodukten erhalten werden.

In einer weiteren Ausführungsform des erfindungsgemäßen Verfahrens werden das Formaldehyd und Alkylenoxid während der Polymerisation zeitgleich in das Reaktionsgemisch dosiert. Dieses verbessert die Ausbildung von

statistischen Copolymeren.

In einer weiteren Ausführungsform des erfindungsgemäßen Verfahrens umfasst dieses weiterhin den Schritt des Isolierens eines Polyoxyalkylen-Oxymethylen-Copolymers mit einem molaren Verhältnis von aus dem Alkylenoxid während der Reaktion einpolymerisierten Alkylenoxidgruppen zu aus dem Formaldehyd während der Reaktion einpolymerisierten Oxymethylengruppen, bestimmt aus den durch $^1$H-NMR-Spektroskopie ermittelten durchschnittlichen Summenformeln, von ≥1:1 bis ≤ 10:1.

Die Erfindung betrifft ebenfalls ein Polyoxyalkylen-Oxymethylen-Copolymer, erhältlich durch ein erfindungsgemäßes Verfahren, mit einem molaren Verhältnis von aus dem Alkylenoxid während der Reaktion einpolymerisierten Alkylenoxidgruppen zu aus dem Formaldehyd während der Reaktion einpolymerisierten Oxymethylengruppen, bestimmt aus den durch $^1$H-NMR-Spektroskopie ermittelten durchschnittlichen Summenformeln, von ≥1:1 bis ≤ 10:1.

In einer Ausführungsform des Polyoxyalkylen-Oxymethylen-Copolymers weist dieses eine Viskosität bei 20 °C, bestimmt mittels eines Rheometers mit einer Kegel-Platte-Konfiguration mit einem Abstand von 50 µm zwischen Kegel und Platte und einer Scherrate von 0,01 bis 1000/s, von ≥ 500 mPas bis ≤ 2000 mPas auf. Vorzugsweise beträgt die Viskosität ≥ 510 mPas bis ≤ 1500 mPas.

In einer weiteren Ausführungsform des Polyoxyalkylen-Oxymethylen-Copolymers weist dieses eine OH-Zahl, bestimmt mittels DIN 53240-2 mit *N*-Methylpyrrolidon als Lösungsmittel, von ≥ 40 mg KOH/g bis ≤ 300 mg KOH/g auf. Vorzugsweise beträgt die OH-Zahl von ≥ 40 mg KOH/g bis ≤ 200 mg KOH/g.

In einer weiteren Ausführungsform des Polyoxyalkylen-Oxymethylen-Copolymers weist dieses einen durch Thermogravimetrie bestimmten relativen Gewichtsverlust von ≤ 15 Gewichts-% bei einer Temperatur von 300 °C auf. Bevorzugt beträgt der relative Gewichtsverlust von ≤ 10 Gewichts-% und besonders bevorzugt ≤ 8 Gewichts-%.

Ein weiterer Aspekt der Erfindung ist ein Polyurethanpolymer, erhältlich durch Reaktion eines erfindungsgemäßen Polyoxyalkylen-Oxymethylen-Copolymers mit einem Polyisocyanat. Das Isocyanat kann insbesondere ein aliphatisches oder aromatisches Di- oder Polyisocyanat. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendüsocyanat, 1,4-Phenylendiisocyanat, 2,4- und/oder 2,6-Toluyiendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit $C_1$ bis $C_6$-Alkylgruppen. Bevorzugt ist hierbei ein Isocyanat aus der Diphenylmcthandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

## Beispiele

Die Erfindung wird anhand der nachfolgenden Figuren und Beispiele näher erläutert, ohne jedoch darauf beschränkt zu sein. Es zeigen:

FIG. 1: eine Reaktoranordnung zur Durchführung des erfindungsgemäßen Verfahrens, auf die sich im Folgenden in den Beispielen immer wieder bezogen wird. Die Abkürzungen bedeuten: MFC: Massenflussregler; CFC: Coriolisflussregler; BPR: Gegendruckregler.

FIG. 2-5: 2D-NMR-Spektren der Produkte aus verschiedenen Beispielen

*Eingesetzte Katalysatoren*

DMC DMC-Katalysator hergestellt nach Beispiel 6 von WO-A 01/80994.
Bi(2-EtHex)$_3$ Bismut tri(2-ethylhexanoate) hergestellt von OMG Borchers GmbH.
Bi(OTf)3 Bismut triflate hergestellt von Sigma-Aldrich.
DBTL Dibutylzinndilaurat hergestellt von Sigma-Aldrich.

*Eingesetzte Starterverbindungen*

PET-1: difunktionelles Poly(oxypropylen)polyol mit einer OH-Zahl von 109,6 $mg_{KOH}$/g, woraus sich das zahlenmittlere Molekulargewicht $M_n$ = 1022 g/mol und die durchschnittliche Summenformel $HO(CH(CH_3)CH_2O)_{17,02}H$ ergibt. Per GPC gegen Polystyrol-Standards wurde ein zahlenmittleres Molekulargewicht $M_n$ = 1564 g/mol und ein Polydispersitätsindex PDI = 1,09 gemessen. Die Abweichung des per GPC ermittelten zahlenmittleren Molekulargewichts vom über die OH-Zahl ermittelten mittleren Molekulargewicht ist auf die Verwendung von Kalibrierstandards mit von PET-1 verschiedener Struktur (Polystyrol) zurückzuführen.

PET-2: trifunktionelles Poly(oxypropylen)polyol (Produkt PET-1110 der Firma Covestro AG) mit einer OH-Zahl von 231 $mg_{KOH}$/g, woraus sich das zahlenmittlere Molekulargewicht $M_n$ 728,6 g/mol und die durchschnittliche Summenformel $HO(CH(CH_3)CH_2O)_{12,25}$ H ergibt.

PET-3: difunktionelles Poly(oxypropylen)polyol (Produkt L800 der Firma Covestro AG) mit einem zahlenmittleren Molekülgewicht $M_n$ von 215 g/mol und durchschnittlich 17,2 Propylenoxid-Einheiten pro Molekül.

PEC-2: trifunktionelles Poly(oxypropylen)carbonatpolyol (Desmophen Typ 04 der Firma Covestro AG) mit einem nominalen Molekulargewicht von 2000 g/mol, einem $CO_2$-Gehalt von 13,8 Gewichts-% und einer nominalen OH-Zahl von 55,8 $mg_{KOH}$/g, woraus sich ein mittleres Molekulargewicht M.W. = 3016,13 g/mol und ein durchschnittlicher Gehalt an eingebaute $CO_2$ von 20,03 Gew-% ergibt.

*Beschreibung der Methoden:*

Bei der Copolymerisation resultierte das Oxymethylenpolyetherpolyol, welches einerseits in der nachfolgenden Formel gezeigte Oxymethylen-Einheiten enthält,

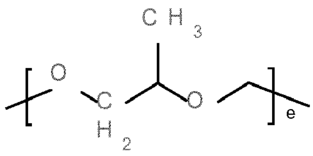

bzw.

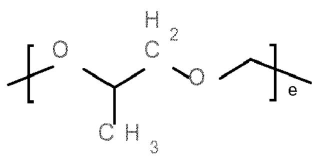

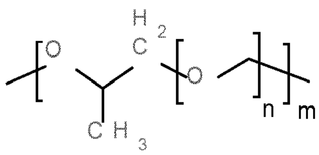

bzw.

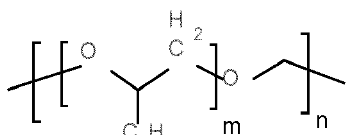

und andererseits in der nachfolgenden Formel gezeigte Polyether-Einheiten enthält.

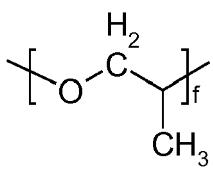

bzw.

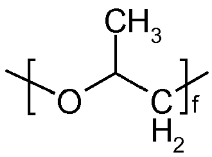

Das molare Verhältnis von Oxymethylengruppen (aus Formaldehyd) zu Ethergruppen im Oxymethylenpolyetherpolyol sowie der Anteil des umgesetzten Formaldehyds (C in mol%) wurden mittels $^1$H-NMR Spektroskopie bestimmt.

Wenn die Copolymerisation von Formaldehyd und Propylenoxid in Gegenwart eines DMC Katalysator und in Anwesenheit von $CO_2$ oder unter Verwendung eines Polyethercarbonatpolyols als Starterverbindung durchgeführt wurde, enthält das Polyol weiterhin die nachfolgend gezeigten Carbonat-Einheiten (PEC).

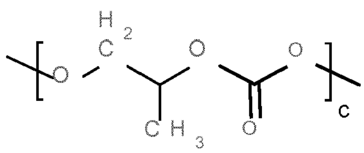

bzw.

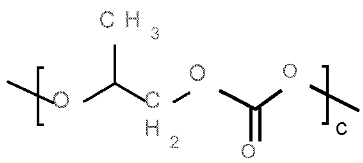

Die Probe wurde jeweils in deuteriertem Chloroform gelöst und auf einem Spektrometer der Firma Bruker (AV400, 400 MHz) vermessen.

$^1$H-NMR-Spektroskopie: Die Messungen erfolgten auf einem Bruker AV400 (400 MHz); die Kalibrierung der chemischen Verschiebungen erfolgte relativ zu Trimethylsilan als internem Standard ($\delta$ = 0.00 ppm) oder zum Lösungsmittelsignal ($CDCl_3$, $\delta$ = 7.26 ppm); s = Singulett, m = Multiplet, bs = verbreitertes Singulett, kb = komplexer Bereich. Die Angabe der Größe der Flächenintegrale der Signale erfolgt relativ zueinander.

Die relevanten Resonanzen im $^1$H-NMR Spektrum (bezogen auf TMS = 0 ppm), die zur Integration verwendet wurden, sind wie folgt:

I1: 1,11 - 1,17: Methylgruppe der Polyether-Einheiten, Fläche der Resonanz entspricht drei H Atomen

12: 1,25 - 1,32: Methylgruppe der Polycarbonat-Einheiten, Fläche der Resonanz entspricht drei H Atomen (Wenn PEC Einheiten anwesend sind).

13: 3,093-4,143: CH- und $CH_2$- Gruppe der Polyether-Einheiten, Fläche der Resonanz entspricht drei H Atomen

14: 4,40-5,20: Methylgruppe der Oxymethylen-Einheiten, Fläche der Resonanz entspricht zwei H Atomen

Angegeben sind das molare Verhältnis Oxymethylengruppen zu Ethergruppen im Polyoxyalkylen-Oxymethylen-Polyol sowie der Anteil des umgesetzten Propylenoxids (C in mol%).

Unter Berücksichtigung der relativen Intensitäten, errechnet sich der relative Anteil $n_i$ der einzelnen Struktureinheiten i mit den Integralen $I_i$; nach:

| | |
|---|---|
| (PO): | n1 = I1/3 |
| (PEC): | n2 = 12/3 |
| ($CH_2O$): | n4 = 14/2 |

Molares Verhältnis von Oxymethylengruppen zu Ethergruppen im Polymer:

$$(CH_2O)/(PO) = I4 / I1$$

Der molare Anteil des umgesetzten Formaldehyds (C in mol%) bezogen auf die Summe der bei der Aktivierung und der Copolymerisation eingesetzten Menge an Propylenoxid, berechnet sich nach der Formel:

$$C = [ (I4/2)/ ((I1/3)+(I2/3)+(I3/3)+(I4/2))] * 100\%$$

Die Signale für $CH_2O$ und PEC-CH (wenn PEC anwesend ist) überlappen teilweise. Deshalb werden alle Flächenintegrale dieser Signale aufsummiert und um den PEC-CH Anteil korrigiert.

Bei Abwesenheit von unterschiedlichen Endgruppen kann für F-funktionelle (wobei F für bihydroxyfunktionelle Polyole 2 ist, und für trifunktionelle Polyole 3 ist) Oxymethylenpolyethercopolymere die durchschnittliche Summenformel mit Hilfe des per OH-Zahl ermittelten durchschnittlichen Molekulargewichtes M.W. errechnet werden nach:

$$MW = (F \times 1000 \times MW_{KOH}) / (OH\text{-}Zahl)$$

$$f = MW/ \Sigma((I_i/\#H_i)*MW_i)$$

wobei $I_i$ ist die Summe der Integralen der Einheit "i" und $\#H_i$ ist die Zahl der Protonen in Einheit "i".

Multiplikation des erhaltenen Faktors f mit den relativen Anteilen n; (i = PE, PEC, $CH_2O$ ergibt die durchschnittliche Anzahl $x_i$ der Einheiten i in der durchschnittlichen Summenformel
Anzahl der PO Einheiten (#PO): ((I1/3) $\times$ f) - $(\#PO)_{starter}$
Anzahl der ($CH_2O$) Einheiten: (14/2) $\times$ f

$^{13}$C-NMR-Spektroskopie: Die Messungen erfolgten auf einem Bruker AV400 (100 MHz); die Kalibrierung der

chemischen Verschiebungen erfolgte relativ zu Trimethylsilan als internem Standard ($\delta$= 0.00 ppm) oder zum Lösungsmittelsignal ($CDCl_3$, $\delta$ = 77.16 ppm); APT (attached proton test): $CH_2$, Cquart: positives Signal (+); CH, $CH_3$: negatives Signal (-); HMBC: Hetero multiple bond correlation; HSQC: Heteronuclear single-quantum correlation.

Gel-Permeations-Chromatographie (GPC): Die Messungen erfolgten auf einem Agilent 1200 Series (G1310A Iso Pump, G1329A ALS, G1316A TCC, G1362A RID, G1365D MWD), Detektion über RID; Elutionsmittel: Chloroform oder Tetrahydrofuran (GPC grade), Flussrate 1.0 ml/min; Säulenkombination: PSS SDV Vorsäule 8×50 mm (5 $\mu$m), 2× PSS SDV linear S 8×300 ml (5 $\mu$m). Polystyrolproben bekannter Molmasse der Firma "PSS Polymer Standards Service" wurden zur Kalibrierung verwendet. Als Messaufnahme- und Auswertungssoftware wurde das Programmpaket "PSS WinGPC Unity" verwendet. Die Aufnahme der GPC Chromatogramme erfolgte in Anlehnung an DIN 55672-1.

Infrarot (IR)-Spektroskopie: Die Messungen erfolgten auf einem Bruker Alpha-P FT-IR-Spektrometer; die Messungen erfolgten in Reinsubstanz; Signalintensitäten: vs = very strong, s = strong, m = medium, w = weak, vw = very weak; b = verbreiterte Bande.

Die OH-Zahl (Hydroxylzahl) wurde in Anlehnung an DIN 53240-2 bestimmt, wobei jedoch N-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "$mg_{KOH}/g$" bezieht sich auf mg[KOH]/g[Polyol]. Das durchschnittliche Molekulargewicht M.W. errechnet sich aus der OH-Zahl nach M.W. = (56 g/mol / OH-Zahl) × 1000 mg/g × F, wobei F für die durchschnittliche OH-Funktionalität steht, welche durch die OH-Funktionalität der Starterverbindung oder der weiteren Starterverbindung vorgegeben ist.

Die Säurezahl wurde in Anlehnung an (DIN EN ISO 2114) bestimmt, wobei jedoch mit einer 0.5 molaren methanolische Kaliumhydroxid-Lösung anstelle einer ethanolischen Kaliumhydroxid-Lösung titriert wurde. Die Endpunktserkennung erfolgte mittels Potentiometrie. Die Angabe der Einheit in "$mg_{KOH}/g$" bezieht sich auf mg[KOH]/g[Polysäure]. Das durchschnittliche Molekulargewicht M.W. errechnet sich aus der Säurezahl-Zahl nach M.W. = (56 g/mol / SäureZahl) × 1000 mg/g × F, wobei F für die durchschnittliche Säure-Funktionalität steht, welche durch die OH-Funktionalität der Starterverbindung oder der weiteren Starterverbindung vorgegeben ist.

Die Bestimmung der Viskosität erfolgte auf einem Physica MCR 501 Rheometer der Fa. Anton Paar. Es wurde eine Kegel-Platte-Konfiguration mit einem Abstand von 50 $\mu$m gewählt (Messsystem DCP25). 0,1 g der Substanz wurde auf der Rheometerplatte aufgebracht und bei 25 °C einer Scherung von 0,01 bis 1000 1/s unterworfen und für 10 min alle 10 s die Viskosität gemessen. Angegeben ist die über alle Messpunkte gemittelte Viskosität. Alternativ erfolgte die Bestimmung der Viskosität auf einem DMA 4500 M Viscometer von Anton Paar. Die Messwerte aus den beiden Messmethoden stimmten mit einer Abweichung von maximal 10% überein.

TGA (Thermogravimetrische Analysen) wurden mit einem Mettler Toledo TGA/DSC 1 durchgeführt. Es wurden zwischen 6 und 20 mg der zu vermessenden Probe mit einer Heizrate von 10 K/min von 25 °C auf 600 °C erhitzt und der relative Gewichtsverlust in Abhängigkeit von der Temperatur ermittelt. Als Auswertesoftware wurde STARe SW 11.00 verwendet. Zur Ermittlung der verschiedenen Zersetzungsstufen wurde, sofern nicht anders erwähnt, ein tangentielles Auswerteverfahren angewendet. Als Zersetzungstemperatur wird der "Midpoint" angegeben.

Für die Reaktionen wurde eine Versuchsapparatur verwendet, die aus einem 970 ml Edelstahlautoklaven ("Depolymerisationsreaktor" R1) und einem 1700 ml Edelstahlautoklaven ("Polymerisationsreaktor" R2) bestand, welche über eine beheizbare und mit einem Ventil absperrbare Brücke zum Transfer des in R1 generierten Formaldehyd-Gases miteinander verbunden waren. Die Brücke bestand aus zwei beheizbaren 1/4-Zoll-Kapillaren, die über einen beheizbaren 200 ml Edelstahlbehälter verbunden waren, welcher mit 100 g wasserfreiem Molsieb A3 als Wasser-Absorber befüllt war. Beide Reaktoren waren mit Hohlwellenrührer und Manometer ausgestattet und unabhängig voneinander beheizbar. Die Gaszufuhr zu R1 erfolgte über ein Tauchrohr. Die Dosiergeschwindigkeit wurde mit einem Massenflussregler (MFC 1, Kapazität: 6 1/min, für Argon bzw. Stickstoff als Trägergas) oder einem Coriolis-Flussregler (CFC1, Kapazität: 700 g/h, für $CO_2$ als Trägergas) geregelt. Der mit Formaldehyd angereicherte Gasstrom wurde durch die Brücke von R1 in R2 geleitet. R2 verfügte über eine zusätzliche Gaszufuhr für CO2, deren Dosiergeschwindigkeit über einen separaten Coriolis-Flussregler (CFC2, Kapazität: 700 g/min) reguliert wurde. Zusätzlich verfügte R2 über eine Flüssigzuleitung, über die Alkylenoxid zudosiert wurde. Die Zudosierung des Alkylenoxides erfolgte durch Beaufschlagung des Alkylenoxid-Vorratsgefäßes mit Stickstoffgas unter einem Druck, der mindestens 10 bar über dem Reaktionsdruck p lag, wobei der Massenstrom durch einen Coriolis-Flussregler (CFC3, Kapazität: 200 g/min) geregelt wurde. Eine dritte Zuleitung erlaubte die Zudosierung weiterer Flüssigreagenzien über eine HPLC-Pumpe. An R2 befand sich eine beheizbare 1/4-Zoll-Kapillare als Gasauslass, die mit einem beheizbaren Hinterdruckregler (back pressure regulator, BPR) versehen war, welcher einen konstanten Druck p im Reaktorsystem gewährleistete.

Die in den Beispielen eingesetzten Druckreaktoren hatte eine Höhe (innen) von 21 cm (R1) bzw. 15 cm (R2) und einen Innendurchmesser von 10 cm (R1 und R2). Die Reaktoren waren ausgestattet mit einem elektrischen Heizmantel (150 Watt maximale Heizleistung). Weiterhin waren die Reaktoren mit einem Einleitrohr sowie je einem Thermofühler mit 6 mm Durchmesser ausgestattet, der bis 60 mm über den Boden in den Reaktor ragte.

Bei dem in den Beispielen eingesetzten Hohlwellenrührer handelte es sich um einen Hohlwellenrührer, bei

dem das Gas über eine hohle Welle des Rührers in die Reaktionsmischung eingeleitet wurde. Der auf der Hohlwelle angebrachte Rührkörper wies vier Arme auf, hatte einen Durchmesser von 50 mm und eine Höhe von 19 mm. An jedem Ende des Arms war ein Gasauslass angebracht, der einen Durchmesser von 3 mm aufwies. Durch die Drehung des Rührers entstand ein Unterdruck derart, dass das über der Reaktionsmischung befindliche Gas ($CO_2$ und/oder Argon oder Stickstoff und ggf. Formaldehyd) abgesaugt wurde und über die Hohlwelle des Rührers in die Reaktionsmischung eingeleitet wurde.

**Beispiel 1: Herstellung eines statistischen Alkylenoxid-Polvoxyalkylen-Oxymethylen-Copolymers bei einer Temperatur von 60°C unter Einsatz einer Bismut-haltigen Verbindung als Katalysator.**

In R1 wurden 500,5 g (16,68 mol) Paraformaldehyd, 8,8 g (27 mmol) 4-Dodecylbenzolsulfonsäure, 13,1 g (92 mmol) Phosphorpentoxid und 151 g Paraffinöl vorgelegt. Das Gemisch wurde bei 100 U/min gerührt. In R2 wurden 302,6 g PET-2 (0,42 mol), 4,3 g (7 mmol) Bismuttriflat ($Bi(OTf)_3$) vorgelegt. Das Gemisch wurde bei 1000 U/min gerührt. Der Nenndruck des BPR wurde auf P=20 bar eingestellt und das Gesamtsystem bei geöffneter Brücke über CFC1 mit $CO_2$ bis zum Nenndruck beaufschlagt. Die Brücke wurde vor dem Absorber auf 150 °C, Absorber auf 200 °C und Überleitung zu R2 auf 120 °C geheizt. Der Innenraum von R2 wurde auf 60 °C, die Gasauslass-Kapillare auf 120 °C und der BPR auf 150 °C geheizt.

Nach Erreichen des Nenndrucks und der Solltemperaturen für Brücke, R2, Gasauslass und BPR wurde der Innenraum von R1 auf 110 °C geheizt und über 24 h gasförmiges Formaldehyd in R2 eingeleitet. Das Trägergas wurde auf 150 g/h eingestellt und zusammen mit dem Systemdruck über die Reaktionszeit konstant gehalten. Während der Polymerisationsreaktion wurden 122,57 g (2,11 mol) Propylenoxid in R2 eingeleitet mit einer Flussrate von 40 g/h.

Nach 24 h wurde R1 abgekühlt und die Leitung geschlossen. Das Trägergas wurde auf $N_2$ gewechselt. Anschließend wurden 74,54 g (1,28 mol) Propylenoxid (40 g/h) in R2 vorgegeben. Im Anschluss wurde das Reaktionsgemisch in R2 bei 25 °C mit 1000 U/min 60 h nachgerührt. Anschließend wurde unter Rühren eine Lösung von 6,01 g (32 mmol) $Na_2S_2O_3$. 5 $H_2O$ in 27 ml Wasser mit einer Flussrate von 5 ml/min über die HLPLC-Pumpe in R2 eingeleitet. Das Gemisch wurde 1 h nachgerührt. Der Überdruck wurde über den BPR abgelassen und das Reaktionsgemisch aus dem Reaktor entnommen.

Als Rohprodukt wurde eine viskose Flüssigkeit mit darin verteilten schwarz-braunen Partikeln erhalten, welche mittels Druckfiltration entfernt wurden. Nach Aufarbeitung erhielt man ein leicht gelbes Öl.

Es sei angemerkt, dass bei dem während der Reaktion herrschenden $CO_2$-Partialdruck kein Einbau von $CO_2$ in die Polymerkette stattfand.

Viskosität: 1301,4 mPa· s

Per thermogravimetrischer Analyse (TGA) wurden drei Zersetzungsstufen ermittelt:

Stufe 1: Zersetzungstemperatur 134,55 °C (relativer Gewichtsverlust 2,32%)

Stufe 2: Zersetzungstemperatur 241,19 °C (relativer Gewichtsverlust 1,19%)

Stufe 3: Zersetzungstemperatur 344,35 °C (relativer Gewichtsverlust 75,90%)

Per Gel-Permeations-Chromatographie (GPC) gegen Polystyrol-Standards wurde ein zahlenmittleres Molekulargewicht $M_n$ = 2421,3 g/mol und ein Polydispersitätsindex PDI = 2,61 ermittelt.

Die OH Zahl ist 78,34 mg KOH/g, die dem Molekulargewicht von 2148,33 g/mol entspricht.

$^1H$-NMR-Spektroskopie (400 MHz, $CDCl_3$): $\delta$ = 0,84-1,3 (m, 3 H, PO-$CH_3$ /PET-2-$CH_3$), 3,14 (m, 0,05 H, PO-CH/PO-$CH_2$/PET-2-$CH_2$/ PET-2-CH), 3,25-3,78 (m, 3,18 H, PO-CH/PO-$CH_2$/PET-2-$CH_2$/ PET-2-CH), 3,79-4 (m, 0,176 H, PO-CH/PO-$CH_2$/PET-2-$CH_2$/ PET-2-CH), 4,59-4,87 (m, 0,0,211 H, $OCH_2O$) ppm.

$^{13}C$-CPD-NMR-Spektroskopie (100 MHz, $CDCl_3$): $\delta$ = 16,68; 16,92; 17,43; 17,59; 18,15; 18,20; 18,49; 55,13; 65,52; 67,2; 71,48; 71,66; 71,66; 71,76; 72,78; 73,03; 73,34; 73,73; 74,26; 74,59; 74,84; 74,59; 74,84; 75,08; 75,28; 75,47; 75,81; 76,79 ($CDCl_3$), 77,10 ($CDCl_3$), 77,43($CDCl_3$), 78,48, 92,34 (O-$CH_2$-O 92,72 (O-$CH_2$-O); 94,38 (O-$CH_2$-O 95,73 (O-$CH_2$-O 96,6(O-$CH_2$-O) ppm.

Das Auftreten einer Vielzahl an Signalen im $^1H$-NMR-Spektrum im Bereich 4,5 bis 5,5 ppm, sowie einer Vielzahl an Signalen mit positiver Polarität im $^{13}C$ APT-NMR-Spektrum im Bereich 89,1 bis 96,5 ppm zeigt das Vorliegen chemisch nicht-äquivalenter Oxymethylen-Gruppen $(CH_2O)_n$ in einer nicht-alternierenden Art und Weise mit unterschiedlicher Kettenlängen. Insbesondere das Nicht-Alternieren konnte gut im 2D-NMR-Spektrum beobachtet werden.(Siehe FIG. 2).

Die durchschnittliche Summenformel beträgt laut $^1H$-NMR-Spektroskopie und dem durch die GPC ermittelten Molekulargewicht: $PO_{27,2}$-PET1110-$(CH_2O)_{3,7}$. Das Produkt enthält somit durchschnittlich 3,7 Oxymethylengruppen pro Molekül.

IR-Spektroskopie: v = 3473,63 (br, OH); 2969,51; 2929,86; 2870,38; 1724,78 (vw); 1452,89; 1373,59; 1343,85;

1295,71; 1090,38; 1033,73; 923,28; 865,22; 640,07; 519,70; 446,06 $cm^{-1}$.

Das IR-Spektrum ist weder identisch mit dem IR-Spektrum von Paraformaldehyd, noch mit dem IR-Spektrum von PET-2. Das Auftreten einer Bande bei 926 $cm^{-1}$ weist auf das Vorliegen von Oxymethylen-Gruppen hin.

Sowohl die NMR- als auch die IR-spektroskopischen Daten belegen zweifelsfrei die Zusammensetzung des Produktes aus Polyetherpolyol mit statistischen Formaldehyd/Propylenoxid-Blöcken.

**Beispiel 2: Herstellung eines statistischen Polyoxyalkylen-Oxymethylen-Copolymers bei einer Temperatur von 60°C unter Einsatz einer Zinn-haltigen und einer Bismut-haltigen Verbindung als Katalysator im Verhältnis 1:1**

In R1 wurden 746,75 g (24,9 mol) Paraformaldehyd, 8,95 g (25,6 mmol) 4-Dodecylbenzolsulfonsäure, 33,51 g (0,24 mol) Phosphorpentoxid und 116 g Paraffinöl vorgelegt. Das Gemisch wurde bei 100 U/min gerührt. In R2 wurden 298,23 g PET-2 (0,41 mol), 1,95 g (3,1 mmol) Dibutylzinndilaurat (DBTL) und 2,05 g (3,12 mmol) Bismuttriflat ($Bi(OTf)_3$) vorgelegt. Das Gemisch wurde bei 1000 U/min gerührt. Der Nenndruck des BPR wurde auf P=20 bar eingestellt und das Gesamtsystem bei geöffneter Brücke über CFC1 mit $CO_2$ bis zum Nenndruck beaufschlagt. Die Brücke wurde vor dem Absorber auf 150 °C, Absorber auf 200 °C und Überleitung zu R2 auf 120 °C geheizt. Der Innenraum von R2 wurde auf 60 °C, die Gasauslass-Kapillare auf 120 °C und der BPR auf 150 °C geheizt.

Nach Erreichen des Nenndrucks und der Solltemperaturen für Brücke, R2, Gasauslass und BPR wurde der Innenraum von R1 auf 110 °C geheizt und über 24 h gasförmiges Formaldehyd in R2 eingeleitet. Das Trägergas wurde auf 150 g/h eingestellt und zusammen mit dem Systemdruck über die Reaktionszeit konstant gehalten. Während der Polymerisationsreaktion wurden 180,25 g (3,10 mol) Propylenoxid in R2 eingeleitet mit einer Flussrate von 40 g/h.

Nach 24 h wurde R1 abgekühlt und die Leitung geschlossen. Das Trägergas wurde auf $N_2$ gewechselt. Anschließend wurden 39,25 g (0,68 mol) Propylenoxid (60 g/h) in R2 vorgegeben. Im Anschluss wurde das Reaktionsgemisch in R2 bei 25 °C mit 1000 U/min 60 h nachgerührt. Anschließend wurde unter Rühren eine Lösung von 6,7 g (27 mmol) 5 $H_2O$ in 27 ml Wasser mit einer Flussrate von 5 ml/min über die HPLC-Pumpe in R2 eingeleitet. Das Gemisch wurde 1 h nachgerührt. Der Überdruck wurde über den BPR abgelassen und das Reaktionsgemisch aus dem Reaktor entnommen.

Als Rohprodukt wurde eine viskose gelbe Flüssigkeit mit darin verteilten schwarzen Partikeln erhalten, welche mittels Druckfiltration entfernt wurden. Das so erhaltene Produkt war ein transparentes, leicht gelbes Öl.

Es sei angemerkt, dass bei dem während der Reaktion herrschenden $CO_2$-Partialdruck kein Einbau von $CO_2$ in die Polymerkette stattfand.

Viskosität: 853,9 mPa· s

Per thermogravimetrischer Analyse (TGA) wurden zwei Zersetzungsstufen ermittelt:

Stufe 1: Zersetzungstemperatur 164,95 °C (relativer Gewichtsverlust 10,22%)

Stufe 2: Zersetzungstemperatur 341,77°C (relativer Gewichtsverlust 69,38%)

Per Gel-Permeations-Chromatographie (GPC) gegen Polystyrol-Standards wurde ein zahlenmittleres Molekulargewicht $M_n$ = 1801 g/mol und ein Polydispersitätsindex PDI = 2,4 ermittelt.

Die OH-Zahl ist: 79,6 mg KOH/g, die dem Molekulargewicht von 2114,3 g/mol entspricht.

$^1$H-NMR-Spektroskopie (400 MHz, $CDCl_3$): $\delta$ = 0,85-1,22 (m, 3 H, PO-$CH_3$ /PET-2-$CH_3$), 3,09 (m, 0,05 H, PO-CH/PO-$CH_2$/PET-2-$CH_2$/PET-2-CH), 3,18-3,71 (m, 3,17 H, PO-CH/PO-$CH_2$/PET-2-$CH_2$/ PET-2-CH), 3,8 (m, 0,26 H, PO-CH/PO-$CH_2$/PET-2-$CH_2$/ PET-2-CH), 4,49-4,9 (m, 0,53 H, $OCH_2O$), 4,9-5,16 (m, 0,02 H, $OCH_2O$) ppm.

$^{13}$C-CPD-NMR-Spektroskopie (100 MHz, $CDCl_3$): $\delta$ = 16,45; 16,61; 16,82; 17,19; 17,30; 17,47; 18,06; 18,2; 18,47, 18,82, 55,62, 65,51, 65,92, 66,3, 67,04, 71,33, 71,61, 72,15, 72,75, 73,02, 73,22, 74,15, 74,28, 74,58, 74,79, 75,02, 75,22, 75,39, 75,74, 76,49, 76,9 ($CDCl_3$), 77,2 ($CDCl_3$), 77,5($CDCl_3$), 78,3, 89,9 (O-$CH_2$-O 90,7 (O-$CH_2$-O 91,1 (O-$CH_2$-O 91,7 (O-$CH_2$-O 92,3(O-$CH_2$-O), 92,7 (O-$CH_2$-O 93,6 (O-$CH_2$-O 94,2 (O-$CH_2$-O 94,4 (O-$CH_2$-O 95,0 (O-$CH_2$-O 95,4 (O-$CH_2$-O 96,4 (O-$CH_2$-O) ppm.

Das Auftreten einer Vielzahl an Signalen im $^1$H-NMR-Spektrum im Bereich 4,5 bis 5,5 ppm, sowie einer Vielzahl an Signalen mit positiver Polarität im $^{13}$C APT-NMR-Spektrum im Bereich 89,1 bis 96,5 ppm zeigt das Vorliegen chemisch nicht-äquivalenter Oxymethylen-Gruppen $(CH_2O)_n$ in einer nicht-alternierenden Art und Weise mit unterschiedlicher Kettenlängen. Insbesondere das Nicht-Alternieren konnte gut im 2D-NMR-Spektrum beobachtet werden.(Siehe FIG 3).

Die durchschnittliche Summenformel beträgt laut $^1$H-NMR-Spektroskopie und dem durch die OH-Zahl ermittelten Molekulargewicht: $PO_{19,9}$-PET1110-$(CH_2O)_{7,6}$. Das Produkt enthält somit durchschnittlich 7,6 Oxymethylengruppen pro Molekül.

IR-Spektroskopie: v = 3453,81 (br, OH), 2871,8, 2970,92, 1726,19 (vw), 1452,89, 1373,59, 1297,12, 1093,21, 1032,32, 989,84, 921,86, 856,22, 819,91, 458,81 $cm^{-1}$.

Das IR-Spektrum ist weder identisch mit dem IR-Spektrum von Paraformaldehyd, noch mit dem IR-Spektrum

von PET-2. Das Auftreten einer Bande bei 922 $cm^{-1}$ weist auf das Vorliegen von Oxymethylen-Gruppen hin.

Sowohl die NMR- als auch die IR-spektroskopischen Daten belegen zweifelsfrei die Zusammensetzung des Produktes aus Polyetherpolyol mit statistischen Formaldehyd/Propylenoxid-Blöcken.

**Beispiel 3: Herstellung eines statistischen Polyoxyalkylen-Oxymethylen-Copolymers bei einer Temperatur von 60°C unter Einsatz einer Zinn-haltigen und einer Bismut-haltigen Verbindung als Katalysator im Verhältnis 3:1**

In R1 wurden 474,04 g (15,8 mol) Paraformaldehyd, 8,08 g (25 mmol) 4-Dodecylbenzolsulfonsäure, 20,39 g (144 mmol) Phosphorpentoxid und 150 g Paraffinöl vorgelegt. Das Gemisch wurde bei 100 U/min gerührt. In R2 wurden 293,95 g PET-2 (0,4 mol), 3,09 g (4,9 mmol) Dibutylzinndilaurat (DBTL) und 1,0 g (1,5 mmol) Bismuttriflat ($Bi(OTf)_3$) vorgelegt. Das Gemisch wurde bei 1000 U/min gerührt. Der Nenndruck des BPR wurde auf P=20 bar eingestellt und das Gesamtsystem bei geöffneter Brücke über CFC1 mit $CO_2$ bis zum Nenndruck beaufschlagt. Die Brücke wurde vor dem Absorber auf 150 °C, Absorber auf 200 °C und Überleitung zu R2 auf 120 °C geheizt. Der Innenraum von R2 wurde auf 60 °C, die Gasauslass-Kapillare auf 120 °C und der BPR auf 150 °C geheizt.

Nach Erreichen des Nenndrucks und der Solltemperaturen für Brücke, R2, Gasauslass und BPR wurde der Innenraum von R1 auf 110 °C geheizt und über 24 h gasförmiges Formaldehyd in R2 eingeleitet. Das Trägergas wurde auf 150 g/h eingestellt und zusammen mit dem Systemdruck über die Reaktionszeit konstant gehalten. Während der Polymerisationsreaktion wurden 145,85 g (2,51 mol) Propylenoxid in R2 eingeleitet mit einer Flussrate von 40 g/h.

Nach 24 h wurde R1 abgekühlt und die Leitung geschlossen. Das Trägergas wurde auf $N_2$ gewechselt. Anschließend wurden 88,55 g (1,52 mol) Propylenoxid (40 g/h) in R2 vorgegeben. Im Anschluss wurde das Reaktionsgemisch in R2 bei 25 °C mit 1000 U/min 60 h nachgerührt. Anschließend wurde unter Rühren eine Lösung von 6,01 g (32 mmol) 5 $H_2O$ in 10 ml Wasser mit einer Flussrate von 5 ml/min über die HLPLC Pumpe in R2 eingeleitet. Das Gemisch wurde 1 h nachgerührt. Der Überdruck wurde über den BPR abgelassen und das Reaktionsgemisch aus dem Reaktor entnommen.

Als Rohprodukt wurde eine viskose Flüssigkeit mit darin verteilten schwarz-braunen Partikeln erhalten, welche mittels Druckfiltration entfernt wurden. Nach Aufarbeitung erhielt man ein leicht gelbes Öl.

Es sei angemerkt, dass bei dem während der Reaktion herrschenden $CO_2$-Partialdruck kein Einbau von $CO_2$ in die Polymerkette stattfand.

Viskosität: 1297,1 mPa· s (bei 25 °C)

Per thermogravimetrischer Analyse (TGA) wurden zwei Zersetzungsstufen ermittelt:

Stufe 1: Zersetzungstemperatur 174 °C (relativer Gewichtsverlust 6,7%)

Stufe 2: Zersetzungstemperatur 345,5 °C (relativer Gewichtsverlust 78,3%)

Per Gel-Permeations-Chromatographie (GPC) gegen Polystyrol-Standards wurde ein zahlenmittleres Molekulargewicht $M_n$ = 2269,3 g/mol und ein Polydispersitätsindex PDI = 4,7 ermittelt.

Die OH Zahl ist 100,75 mg KOH/g, die dem Molekulargewicht von 1670,47 g/mol entspricht.

$^1$H-NMR-Spektroskopie (400 MHz, $CDCl_3$): $\delta$ = 0,82-1,33 (m, 3 H, PO-$CH_3$ /PET-2-$CH_3$), 3,05-4,01 (m, 3,29 H, PO-CH/PO-$CH_2$/PET-2-$CH_2$/ PET-2-CH), 4,58-5,03 (m, 0,34 H, $OCH_2O$) ppm.

$^{13}$C-CPD-NMR-Spektroskopie (100 MHz, $CDCl_3$): $\delta$ = 15,97; 16,19; 16,4; 16,46; 16,6; 16,82; 16,87; 17,1; 17,21; 17,32; 17,49; 17,98; 18,04; 18,07; 18,31; 18,46; 18,51; 18,74; 70,74; 71,36; 71,70; 71,76; 72,73; 73,0; 74,18; 74,6; 74,79; 75,04; 75,23; 75,41; 75,8; 75,85; 78,41; 89,83(O-$CH_2$-O),90,43(O-$CH_2$-O); 90,69(O-$CH_2$-O); 91,08(O-$CH_2$-O); 91,61 (O-$CH_2$-O 92,24 (O-$CH_2$-O), 92,57 (O-$CH_2$-O), 93,31(O-$CH_2$-O); 94,68(O-$CH_2$-O); 95,26(O-$CH_2$-O); 95,65(O-$CH_2$-O) ppm.

Das Auftreten einer Vielzahl an Signalen im $^1$H-NMR-Spektrum im Bereich 4,5 bis 5,5 ppm, sowie einer Vielzahl an Signalen mit positiver Polarität im $^{13}$C APT-NMR-Spektrum im Bereich 89,1 bis 96,5 ppm zeigt das Vorliegen chemisch nicht-äquivalenter Oxymethylen-Gruppen $(CH_2O)_n$ in einer nicht-alternierenden Art und Weise mit unterschiedlicher Kettenlängen. Insbesondere das Nicht-Alternieren konnte gut im 2D-NMR-Spektrum beobachtet werden.(Siehe FIG. 4).

Die durchschnittliche Summenformel beträgt laut $^1$H-NMR-Spektroskopie und dem durch die GPC ermittelten Molekulargewicht: $PO_{23,46}$-PET1110-$(CH_2O)_{5,86}$. Das Produkt enthält somit durchschnittlich 5,86 Oxymethylengruppen pro Molekül.

IR-Spektroskopie: ν = 3465,13 (br, OH); 2969,51; 2929,86; 2870,38; 1727,61 (vw); 1454,31; 1373,59; 1343,85; 1297,12; 1091,79; 1032,32; 988,42; 924,70; 865,22; 640,97; 525,36; 457,39 $cm^{-1}$.

Das IR-Spektrum ist weder identisch mit dem IR-Spektrum von Paraformaldehyd, noch mit dem IR-Spektrum von PET-2. Das Auftreten einer Bande bei 926 $cm^{-1}$ weist auf das Vorliegen von Oxymethylen-Gruppen hin.

Sowohl die NMR- als auch die IR-spektroskopischen Daten belegen zweifelsfrei die Zusammensetzung des Produktes aus Polyetherpolyol mit statistischen Formaldehyd/Propylenoxid-Blöcken.

**Beispiel 4: Herstellung eines statistischen Polyoxyalkylen-Oxymethylen-Copolymers bei einer Temperatur von 60°C unter Einsatz einer Zinn-haltigen und einer Bismut-haltigen Verbindung als Katalysator im Verhältnis 1:3**

In R1 wurden 474,04 g (15,8 mol) Paraformaldehyd, 8,08 g (25 mmol) 4-Dodecylbenzolsulfonsäure, 20,39 g (144 mmol) Phosphorpentoxid und 150 g Paraffinöl vorgelegt. Das Gemisch wurde bei 100 U/min gerührt. In R2 wurden 293,95 g PET-2 (0,4 mol), 1,7 g (3,0 mmol) Dibutylzinndilaurat (DBTL) und 3,62 g (6,0 mmol) Bismuttriflat ($Bi(OTf)_3$) vorgelegt. Das Gemisch wurde bei 1000 U/min gerührt. Der Nenndruck des BPR wurde auf P=20 bar eingestellt und das Gesamtsystem bei geöffneter Brücke über CFC1 mit $CO_2$ bis zum Nenndruck beaufschlagt. Die Brücke wurde vor dem Absorber auf 150 °C, Absorber auf 200 °C und Überleitung zu R2 auf 120 °C geheizt. Der Innenraum von R2 wurde auf 60 °C, die Gasauslass-Kapillare auf 120 °C und der BPR auf 150 °C geheizt.

Nach Erreichen des Nenndrucks und der Solltemperaturen für Brücke, R2, Gasauslass und BPR wurde der Innenraum von R1 auf 110 °C geheizt und über 24 h gasförmiges Formaldehyd in R2 eingeleitet. Das Trägergas wurde auf 150 g/h eingestellt und zusammen mit dem Systemdruck über die Reaktionszeit konstant gehalten. Während der Polymerisationsreaktion wurden 145,85 g (2,51 mol) Propylenoxid in R2 eingeleitet mit einer Flussrate von 40 g/h.

Nach 24 h wurde R1 abgekühlt und die Leitung geschlossen. Das Trägergas wurde auf $N_2$ gewechselt und direkt in der Brücke. Anschließend wurden 88,55 g (1,52 mol) Propylenoxid (40 g/h) in R2 vorgegeben. Im Anschluss wurde das Reaktionsgemisch in R2 bei 25 °C mit 1000 U/min 60 h nachgerührt. Anschließend wurde unter Rühren eine Lösung von 6,01 g (32 mmol) $Na_2S_2O_3$. 5 $H_2O$ in 10 ml Wasser mit einer Flussrate von 5 ml/min über die HLPLC Pumpe in R2 eingeleitet. Das Gemisch wurde 1 h nachgerührt. Der Überdruck wurde über den BPR abgelassen und das Reaktionsgemisch aus dem Reaktor entnommen.

Als Rohprodukt wurde eine viskose Flüssigkeit mit darin verteilten schwarz-braunen Partikeln erhalten, welche mittels Druckfiltration entfernt wurden. Nach Aufarbeitung erhielt man ein leicht gelbes Öl.

Es sei angemerkt, dass bei dem während der Reaktion herrschenden $CO_2$-Partialdruck kein Einbau von $CO_2$ in die Polymerkette stattfand.

Viskosität: 1307 mPa· s (bei 25 °C)

Per thermogravimetrischer Analyse (TGA) wurden zwei Zersetzungsstufen ermittelt:

Stufe 1: Zersetzungstemperatur 268,14 °C (relativer Gewichtsverlust 7,4%)

Stufe 2: Zersetzungstemperatur 352,28 °C (relativer Gewichtsverlust 87,8%)

Per Gel-Permeations-Chromatographie (GPC) gegen Polystyrol-Standards wurde ein zahlenmittleres Molekulargewicht $M_n$ = 3095 g/mol und ein Polydispersitätsindex PDI = 2.6 ermittelt.

Die OH Zahl ist 82,10 mg KOH/g, die dem Molekulargewicht von 2049,94 g/mol entspricht.

$^1$H-NMR-Spektroskopie (400 MHz, $CDCl_3$): $\delta$ = 0,894-1,31 (m, 3 H, PO-$CH_3$ /PET-2-$CH_3$), 3,08-3,2 (m, 0,054 H, PO-CH/PO-$CH_2$/PET-2-$CH_2$/ PET-2-CH), 3,24-3,78(m, 3,18 H, PO-CH/PO-$CH_2$/PET-2-$CH_2$/ PET-2-CH), 3,79-4(m, 0,168 H, PO-CH/PO-$CH_2$/PET-2-$CH_2$/ PET-2-CH), 4,55-4,90 (m, 0,198 H, $OCH_2O$), 5,08 (m, 0,019 H, $OCH_2O$) ppm.

$^{13}$C-CPD-NMR-Spektroskopie (100 MHz, $CDCl_3$): $\delta$ = 17,29; 18,16; 18,56; 55,14; 65,54; 66,12; 67,10; 71,59; 72,86; 73,45; 75,40; 75,99; 76,67; 78,53; 92,39(O-$CH_2$-O),94,45(O-$CH_2$-O); 95,91(O-$CH_2$-O); 96,69(O-$CH_2$-O) ppm.

Das Auftreten einer Vielzahl an Signalen im $^1$H-NMR-Spektrum im Bereich 4,5 bis 5,5 ppm, sowie einer Vielzahl an Signalen mit positiver Polarität im $^{13}$C APT-NMR-Spektrum im Bereich 89,1 bis 96,5 ppm zeigt das Vorliegen chemisch nicht-äquivalenter Oxymethylengruppen $(CH_2O)_n$ in einer nicht-alternierenden Art und Weise mit unterschiedlicher Kettenlängen. Insbesondere das Nicht-Alternieren konnte gut im 2D-NMR-Spektrum beobachtet werden (siehe FIG. 5).

Die durchschnittliche Summenformel beträgt laut $^1$H-NMR-Spektroskopie und dem durch die GPC ermittelten Molekulargewicht: $PO_{38,21}$-PET1110-$(CH_2O)_{4,8}$. Das Produkt enthält somit durchschnittlich 4,8 Oxymethylengruppen pro Molekül.

IR-Spektroskopie: v = 3470,80 (br, OH); 2969,51; 2929,86; 2868,97; 1724,78 (vw); 1452,89; 1373,59; 1343,85; 1297,12; 1091,79; 1036,57; 923,28; 863,81; 665,55 $cm^{-1}$.

Das IR-Spektrum ist weder identisch mit dem IR-Spektrum von Paraformaldehyd, noch mit dem IR-Spektrum von PET-2. Das Auftreten einer Bande bei 923 $cm^{-1}$ weist auf das Vorliegen von Oxymethylen-Gruppen hin.

Sowohl die NMR- als auch die IR-spektroskopischen Daten belegen zweifelsfrei die Zusammensetzung des Produktes aus Polyetherpolyol mit statistischen Formaldehyd/Propylenoxid-Blöcken.

*Vergleich*

Beispiel 1 und Beispiele 2 bis 4 belegen, dass sowohl Bismut-Verbindungen als alleiniger Katalysator als auch Kombinationen von Zinn- und Bismut-Verbindungen als Katalysator für das erfindungsgemäße Verfahren eingesetzt werden können. Beispiele 2 bis 4 belegen, dass Zinn- und Bismut-Verbindungen in unterschiedlichen Verhältnissen als

Katalysator für das erfindungsgemäße Verfahren eingesetzt werden können.

**Beispiel 5: Herstellung eines statistischen Polyoxyalkylen-Oxymethylen-Copolymers bei einer Temperatur von 60°C unter Einsatz einer Zinn-haltigen und einer Bismut-haltigen Verbindung als Katalysator und eines Polyethercarbonatpolyols als Starter-Verbindung**

In R1 wurden 500,4 g (16,68 mol) Paraformaldehyd, 15,3 g (0,048 mmol) 4-Dodecylbenzolsulfonsäure, 8,02 g (0,056 mol) Phosphorpentoxid und 151 g Paraffinöl vorgelegt. Das Gemisch wurde bei 100 U/min gerührt. In R2 wurden 300,4 g PEC-2 (0,1 mol), 2,04 g (3,2 mmol) Dibutylzinndilaurat (DBTL) und 2,03 g (3,1 mmol) Bismuttriflat ($Bi(OTf)_3$) vorgelegt. Das Gemisch wurde bei 1000 U/min gerührt. Der Nenndruck des BPR wurde auf P=20 bar eingestellt und das Gesamtsystem bei geöffneter Brücke über CFC1 mit $CO_2$ bis zum Nenndruck beaufschlagt. Die Brücke wurde vor dem Absorber auf 150 °C, Absorber auf 200 °C und Überleitung zu R2 auf 120 °C geheizt. Der Innenraum von R2 wurde auf 60 °C, die Gasauslass-Kapillare auf 120 °C und der BPR auf 150 °C geheizt.

Nach Erreichen des Nenndrucks und der Solltemperaturen für Brücke, R2, Gasauslass und BPR wurde der Innenraum von R1 auf 120 °C geheizt und über 24 h gasförmiges Formaldehyd in R2 eingeleitet. Das Trägergas wurde auf 150 g/h eingestellt und zusammen mit dem Systemdruck über die Reaktionszeit konstant gehalten. Während der Polymerisationsreaktion wurden 135,0 g (2,32 mol) Propylenoxid in R2 eingeleitet mit einer Flussrate von 40 g/h.

Nach 24 h wurde R1 abgekühlt und die Leitung geschlossen. Das Trägergas wurde auf $N_2$ gewechselt. Anschließend wurden 18,19 g (0,31 mol) Propylenoxid (40 g/h) in R2 vorgegeben. Im Anschluss wurde das Reaktionsgemisch in R2 bei 25 °C mit 1000 U/min 12 h nachgerührt. Anschließend wurden 250 ml Wasser in R2 zugegeben und das Gemisch wurde 24 h nachgerührt. Der Überdruck wurde über den BPR abgelassen und das Reaktionsgemisch aus dem Reaktor entnommen.

Als Rohprodukt wurde eine viskose gelbe Flüssigkeit mit darin verteilten schwarzen Partikeln erhalten, welche mittels Druckfiltration entfernt wurden. Das so erhaltene Produkt war ein transparentes, braunartiges gelbes Öl.

Es sei angemerkt, dass bei dem während der Reaktion herrschenden $CO_2$-Partialdruck kein Einbau von $CO_2$ in die Polymerkette stattfand.

Per thermogravimetrischer Analyse (TGA) wurde eine Zersetzungsstufe ermittelt:

Zersetzungstemperatur: 316,32 °C (relativer Gewichtsverlust 91,8%)

Per Gel-Permeations-Chromatographie (GPC) gegen Polystyrol-Standards wurde ein zahlenmittleres Molekulargewicht $M_n$ = 4849 g/mol und ein Polydispersitätsindex PDI = 2,19 ermittelt.

Die OH Zahl ist 41,3 mg KOH/g, die dem Molekulargewicht von 4079,34 entspricht.

$^1H$-NMR-Spektroskopie (400 MHz, $CDCl_3$): $\delta$ = 0,988-1,159 (m, 1 H, PO-$CH_3$ /PEC-2-$CH_3$), 1,16-1,33 (m, 0,41 H, PO-$CH_3$ /PEC-2-$CH_3$), 3,032-3,715 (m, 1,136 H, PO-CH/PO-$CH_2$/PEC-2-$CH_2$/ PEC-2-CH), 3,72-4,24 (m, 0,224 H, PO-CH/PO-$CH_2$/PEC-2-$CH_2$/ PEC-2-CH), 4,44-5,045 (m, 0,21 H, $OCH_2O$ PEC-2-$CH_2$) ppm.

$^{13}C$-CPD-NMR-Spektroskopie (100 MHz, $CDCl_3$): $\delta$ = 16,26; 16,652; 17,15; 17,27; 17,41; 18,12; 18,44; 18,53; 55,126; 66,26; 68,82; 70,31; 70,37; 71,20; 71,72; 72,91; 73,05; 73,34; 73,49; 73,75; 74,01; 75,07; 75,26; 75,35; 75,44; 75,79; 77,13 ($CDCl_3$), 77,33 ($CDCl_3$), 77,45($CDCl_3$), 92,3 (O-$CH_2$-O 93,44 (O-$CH_2$-O), 94,33 (O-$CH_2$-O), 95,673 (O-$CH_2$-O), 154,18 (C=O); 154,44 (C=O); 154,71 (C=O); 154,88 (C=O) ppm.

Das Auftreten einer Vielzahl an Signalen im $^1H$-NMR-Spektrum im Bereich 4,5 bis 5,5 ppm, sowie einer Vielzahl an Signalen mit positiver Polarität im $^{13}C$ APT-NMR-Spektrum im Bereich 89,1 bis 96,5 ppm zeigt das Vorliegen chemisch nicht-äquivalenter Oxymethylen-Gruppen $(CH_2O)_n$ in einer nicht-alternierenden Art und Weise mit unterschiedlicher Kettenlängen. Insbesondere das Nicht-Alternieren konnte gut im 2D-NMR-Spektrum beobachtet werden.

Die durchschnittliche Summenformel beträgt laut $^1H$-NMR-Spektroskopie und dem durch die OH-Zahl ermittelten Molekulargewicht: $PO_{15,78}$-PEC-2-$(CH_2O)_{5,83}$. Das Produkt enthält somit durchschnittlich 5,8 Oxymethylengruppen pro Molekül.

IR-Spektroskopie: ν = 3459,47 (w, br, OH), 2972,34; 2932,69; 2874,63; 1804,08; 1741,77 (C=O); 1454,31; 1375,01; 1250,39; 1091,79; 968,59; 928,94; 855,31; 788,75; 734,94; 702,37 $cm^{-1}$.

Das IR-Spektrum ist weder identisch mit dem IR-Spektrum von Paraformaldehyd, noch mit dem IR-Spektrum von PEC-2. Das Auftreten einer Bande bei 929 $cm^{-1}$ weist auf das Vorliegen von Oxymethylengruppen hin.

Sowohl die NMR- als auch die IR-spektroskopischen Daten belegen zweifelsfrei die Zusammensetzung des Produktes aus Polyethercarbonat mit statistischen Formaldehyd/Propylenoxid-Blöcken.

*Vergleich*

Beispiel 2 und Beispiel 5 belegen, dass sowohl Polyetherpolyole (Beispiel 2) als auch Polyethercarbonatpolyole (Beispiel 5) als Starterverbindung für das erfindungsgemäße Verfahren eingesetzt werden können.

**Beispiel 6: Herstellung eines Polyoxyalkylen-Oxymethylen-Copolymers bei einer Temperatur von 60°C unter Einsatz einer Zinn-haltigen Verbindung als -Katalysator und eines DMC-Katalysators.**

In R1 wurden 180,33 g (6,011 mol) Paraformaldehyd, 4,18 g (0,013 mol) 4-Dodecylbenzolsulfonsäure, 3,2 g (0,011 mol) Phosphorpentoxid und 100,05 g Paraffin vorgelegt. In R2 wurden 248,5g PET-1 und 0,105g DMC-Katalysator vorgelegt. Der BPR wurde auf 1 bar Solldruck eingestellt und der Reaktor bei geöffnetem Gasauslass 10 min mit Argon gespült. Anschließend wurde R2 mit einer Membranpumpe bei 50 mbar Pumpenvakuum evakuiert und der Reaktor auf 130 °C Innentemperatur geheizt. Nach Erreichen der Temperatur wurde die Evakuierung für 30 min fortgesetzt. Anschließend wurde die Verbindung zur Vakuumpumpe unterbrochen, der BPR auf 20 bar gesetzt und R2 bis Erreichen dieses Wertes mit $\dot{m}_{CFC2}$= 500 g/h $CO_2$ beschickt. Anschließend wurden unter Rühren bei 700 U/min mit $\dot{m}_{CFC3}$= 60 g/h 3 Pulse à 25 g (0,43 mol) Propylenoxid in R2 eingeleitet, wobei nach jedem Puls der Druckabfall durch Zudosierung von $CO_2$ ausgeglichen wurde, und vor jeder weiteren Zugabe von Propylenoxid abgewartet wurde, bis kein weiterer Druckabfall zu beobachten war. Nachdem die Reaktion des dritten Propylenoxid-Pulses abgeklungen war (kein weiterer Druckabfall zu beobachten), wurde der Druck in R2 mit $CO_2$ auf 20 bar eingestellt und kontinuierlich unter Rühren bei 700 U/min mit $\dot{m}_{CFC3}$= 60 g/h insgesamt 100 g (1,72 mol) Propylenoxid zudosiert. Nach Beendigung der Zugabe wurde R1 mit 20,5 bar $CO_2$ beaufschlagt und die Brücke zwischen R1 und R2 geöffnet. Der Massenstrom $\dot{m}_{in,R1}$ ($CO_2$) wurde auf 300 g/h eingestellt.

Die Brücke wurde vor dem Absorber auf 140 °C, Absorber und Überleitung zu R2 auf 120 °C, Gasauslass-Kapillare auf 60 °C und BPR auf 140 °C geheizt. R2 wurde auf 60 °C Innentemperatur abgekühlt. Nach Erreichen der Temperatur wurde über die HPLC-Pumpe mit einer Flussrate von 5 ml/min eine Lösung von 7,22 g (0,011 mol) Dibutylzinndilaurat (DBTL) in 25 ml Dichlormethan in R2 eingeleitet.

Dann wurde R1 unter Rühren bei 50 U/min auf 125 °C Innentemperatur geheizt und nach Erreichen der Temperatur über 5 h gasförmiges Formaldehyd in R2 eingeleitet.

Anschließend wurde die $CO_2$-Zufuhr unterbrochen, die Brücke abgesperrt und R1 auf 25 °C abgekühlt. In R2 wurde unter Rühren bei 400 U/min mit der HPLC-Pumpe bei einer Flussrate von 10 ml/min eine Lösung von 57,05 g (0,50 mol) Glutarsäureanhydrid in 100 ml Dichlormethan eingeleitet. Nach beendeter Zugabe wurde die Innentemperatur in R2 auf 100 °C angehoben und das Reaktionsgemisch bei dieser Temperatur 18 h bei 400 U/min gerührt. Anschließend wurde der Druck abgelassen und R1 und R2 auf 25 °C gekühlt. Der Gewichtsverlust in R1 betrug 89,16 g. In R2 wurden 655,42 g eines gelben viskosen Öls mit farblosen festen Partikeln vorgefunden. Dieses wurde mit 100 ml Chloroform verdünnt und über einen Papierfilter filtriert. Nach Entfernen der flüchtigen Komponenten des Filtrates unter vermindertem Druck wurden 463,27 g eines klaren, gelben Öls erhalten.
Viskosität: 0,52 Pa·s.

Per thermogravimetrischer Analyse (TGA) wurden zwei Zersetzungsstufen ermittelt:

Stufe 1: Zersetzungstemperatur 142,40 °C, relativer Gewichtsverlust 6,80%

Stufe 2: Zersetzungstemperatur 379,64 °C, relativer Gewichtsverlust 80,28%

Zur Ermittlung der 1. Zersetzungsstufe wurde ein horizontales Auswerteverfahren angewendet.

Per Gel-Permeations-Chromatographie (GPC) gegen Polystyrol-Standards wurde ein zahlenmittleres Molekulargewicht $M_n$ = 2091 g/mol und ein Polydispersitätsindex PDI = 1,35 ermittelt.

OH-Zahl: 52,6 $mg_{KOH}$/g. Hieraus ergibt sich ein durchschnittliches Molekulargewicht M.W. = 2129 g/mol.

$^1$H-NMR-Spektroskopie (400 MHz, $CDCl_3$): $\delta$ = 0,82-0,99 (m, 2,49 H), 0,99-1,23 (m, 86,73 H, PE-$CH_3$), 1,23-1,39 (m, 7,90 H, PEC-$CH_3$), 1,48 (d, *J* = 6,0 Hz, 2,29 H, cPC-$CH_3$), 1,87-1,99 (m, 3,91 H, Gt-$CH_2$), 2,32-2,47 (m, 8,00 H, Gt-C(O)$CH_2$), 3,17-3,79 (m, 87,29 H, PE-CH/PE-$CH_2$/PEC-$CH_2$), 3,81-3,95 (m, 1,97 H), 4,02 (dd, *J* = 8,2 Hz, 1,01 H, cPC-$CH_2$), 4,57 (dd, *J* = 7,5 Hz, 0,72 H, cPC-$CH_2$), 4,69-4,94 (m, 5,62 H, $OCH_2O$/PEC-CH/cPC-CH), 5,13 (s, 3,09 H, $OCH_2O$), 5,27 (s, 0,11 H, $OCH_2O$), 5,27-5,39 (m, 3,14 H, $OCH_2O$) ppm.

Die durchschnittliche Summenformel beträgt laut $^1$H-NMR-Spektroskopie Gt-O-$PE_{28,91}$-$PEC_{2,63}$-$(CH_2O)_{4,29}$-Gt. Die Carbonat-Einheiten resultieren aus der Aktivierung des DMC Katalysators. Das Produkt enthält durchschnittlich 4,29 Oxymethylengruppen pro Molekül.

Das durchschnittliche Molekulargewicht beträgt laut $^1$H-NMR-Spektroskopie 2323 g/mol.

$^{13}$C-APT-NMR-Spektroskopie (100 MHz, $CDCl_3$): $\delta$ = 13,0 (-), 13,6 (-), 16,2 (-), 16,6 (-), 16,7 (-), 16,8 (-), 17,1 (-), 17,5 (-), 17,6 (-), 17,9 (-), 18,1 (-), 18,8 (-), 19,2 (+), 19,3 (+), 19,4 (+), 19,5 (+), 19,6 (+), 22,1 (+), 24,3 (+), 24,5 (+), 25,7 (+), 26,1 (+), 28,6 (+), 28,8 (+), 29,0 (+), 29,1 (+), 31,3 (+), 32,1 (+), 32,3 (+), 32,6 (+), 32,8 (+), 32,9 (+), 33,3 (+), 65,1 (-), 66,6 (-), 66,7 (-), 70,1 (+), 72,4 (+), 72,6 (+), 72,7 (+), 72,9 (-), 73,2 (-), 73,3 (-), 73,9 (-), 73,9 (-), 74,4 (-), 74,5 (-), 74,6 (-), 74,8 (-), 74,8 (-), 74,9 (-), 76,0 (-), 76,0 (-), 84,3 (+, O-$CH_2$-O), 84,9 (+, O-$CH_2$-O), 87,8 (+, O-$CH_2$-O), 88,5 (+, O-$CH_2$-O), 88,8 (+, O-$CH_2$-O), 89,3 (+, O-$CH_2$-O), 89,6 (+, O-$CH_2$-O), 90,0 (+, O-$CH_2$-O), 90,1 (+, O-$CH_2$-O), 91,7 (+, O-$CH_2$-O), 92,9 (+, O-$CH_2$-O), 153,7 (+, C=O, PEC), 153,8 (+, C=O, PEC), 154,2 (+, C=O, PEC), 154,3 (+, C=O,

PEC), 171,6 (+), 171,7 (+), 171,8 (+), 175,0 (+), 175,2 (+) ppm.

Sowohl im $^1H$- als auch im $^{13}C$-NMR-Spektrum wurden Signale für Polyethercarbonat-Gruppen (PEC) und Oxymethylen-Gruppen ($OCH_2O$) beobachtet. Das Auftreten einer Vielzahl an Signalen im $^1H$-NMR-Spektrum im Bereich 4,4 bis 5,2 ppm, sowie einer Vielzahl an Signalen mit positiver Polarität im $^{13}C$-APT-NMR-Spektrum im Bereich 84,3 bis 92,9 ppm zeigt das Vorliegen chemisch nicht-äquivalenter Oxymethylen-Gruppen in Blöcken $(CH_2O)_n$ mit unterschiedlicher Kettenlängen. Das Auftreten von Carbonat-Signalen im $^{13}C$-APT-NMR-Spektrum bei 153 bis 155 ppm zeigt das Vorliegen von Polyethercarbonat-Einheiten.

IR-Spektroskopie: ν = 2971 (vw,), 2930 (w), 2896 (w), 2869 (w), 1811 (w, ν[C=O; cPC]), 1737 (m, ν[C=O]; PEC), 1617 (vw), 1453 (w), 1373 (w), 1345 (vw), 1296 (vw), 1262 (w), 1094 (s), 1012 (w), 968 (w), 928 (vw), 865 (vw), 776 (vw), 734 (vw), 524 (vw) $cm^{-1}$.

Das IR-Spektrum ist weder identisch mit dem IR-Spektrum von Paraformaldehyd, noch mit dem IR-Spektrum von PET-1. Die Bande bei 1737 $cm^{-1}$ zeigt die Anwesenheit von Polyethercarbonat-Blöcken. Das Auftreten einer Bande bei 968 $cm^{-1}$ weist auf das Vorliegen von Oxymethylen-Gruppen hin.

Sowohl die NMR- als auch die IR-spektroskopischen Daten belegen zweifelsfrei die Zusammensetzung des Produktes aus Polyether-Polyethercarbonat-Oxymethylen-Blöcken.

**Beispiel** 7: **Herstellung eines statistischen Polyoxyalkylen-Oxymethylen-Copolymers bei einer Temperatur von 40°C unter Einsatz einer Zinn-haltigen Verbindung als -Katalysator.**

In R1 wurden 502,09 g (16,73 mol) Paraformaldehyd, 15,05 g (46,7 mmol) 4-Dodecylbenzolsulfonsäure, 8,13 g (28,6 mmol) Phosphorpentoxid und 150,95 g Paraffinöl vorgelegt. Das Gemisch wurde bei 100 U/min gerührt. In R2 wurden 300,15 g PET-2 (0,41 mol), 5,14 g (8,1 mmol) DBTL vorgelegt. Das Gemisch wurde bei 1000 U/min gerührt. Der Nenndruck des BPR wurde auf P=20 bar eingestellt und das Gesamtsystem bei geöffneter Brücke über CFC1 mit $CO_2$ bis zum Nenndruck beaufschlagt. Die Brücke wurde vor dem Absorber auf 150 °C, Absorber auf 200 °C und Überleitung zu R2 auf 120 °C geheizt. Der Innenraum von R2 wurde auf 40 °C, die Gasauslass-Kapillare auf 120 °C und der BPR auf 150 °C geheizt.

Nach Erreichen des Nenndrucks und der Solltemperaturen für Brücke, R2, Gasauslass und BPR wurde der Innenraum von R1 auf 110 °C geheizt und über 24 h gasförmiges Formaldehyd in R2 eingeleitet. Das Trägergas wurde auf 150 g/h eingestellt und zusammen mit dem Systemdruck über die Reaktionszeit konstant gehalten. Während der Polymerisationsreaktion wurden 29.47 g (0,5 mol) Propylenoxid in R2 eingeleitet mit einer Flussrate von 40 g/h.

Nach 10 h wurde R1 abgekühlt und die Leitung geschlossen. Das Trägergas wurde auf $N_2$ gewechselt. Anschließend wurden 30,45 g (0,52 mol) Propylenoxid (40 g/h) in R2 vorgegeben. Im Anschluss wurde das Reaktionsgemisch in R2 bei 25 °C mit 1000 U/min 1 h nachgerührt und abgekühlt und der Überdrück abgelassen. Anschließend wurde 400 ml Wasser in R2 eingeleitet. Das Gemisch wurde 12 h nachgerührt. Der Überdruck wurde über den BPR abgelassen und das Reaktionsgemisch aus dem Reaktor entnommen.

Als Rohprodukt wurde eine viskose Flüssigkeit mit darin verteilten weißen Partikeln erhalten, welche mittels Druckfiltration entfernt wurden. Nach Aufarbeitung erhielt man ein leicht gelbes Öl.

Es sei angemerkt, dass bei dem während der Reaktion herrschenden $CO_2$-Partialdruck kein Einbau von $CO_2$ in die Polymerkette stattfand.

Viskosität: 431,7 mPa· s

Per thermogravimetrischer Analyse (TGA) wurde eine Zersetzungsstufe ermittelt:

Zersetzungstemperatur 347,93 °C (relativer Gewichtsverlust -92,53 %)

Per Gel-Permeations-Chromatographie (GPC) gegen Polystyrol-Standards wurde ein zahlenmittleres Molekulargewicht $M_n$ = 889,3 g/mol und ein Polydispersitätsindex PDI = 1,06 ermittelt.

Die OH Zahl ist 156.05 mg KOH/g, die dem Molekulargewicht von 1078,50 g/mol entspricht.

$^1H$-NMR-Spektroskopie (400 MHz, $CDCl_3$): δ = 1,026-1,226 (m, 27,67 H, PO-$CH_3$ /PET-2-$CH_3$), 1,236-1,446 (m,1 H, PO-$CH_3$ /PET-2-$CH_3$), 3,14 (m, 1,65 H, PO-CH/PO-$CH_2$/PET-2-$CH_2$/ PET-2-CH), 3,244-3,8 (m, 30,63 H, PO-CH/PO-$CH_2$/PET-2-$CH_2$/ PET-2-CH), 3,87-4,13 (m, 2,37 H, PO-CH/PO-$CH_2$/PET-2-$CH_2$/ PET-2-CH), 4,56-5,24 (m, 0,61 H, $OCH_2O$) ppm.

$^{13}C$-CPD-NMR-Spektroskopie (100 MHz, $CDCl_3$): δ = 17,02;17,47; 17,83-18,64; 65,51-65,81; 66,86-67,1; 71,51; 72,87; 73,32; 74,13; 74,49; 74,94; 75,12; 75,39; 75,84; 76,38; 76,65; 76,92-77,64 ($CDCl_3$), 78,45; 89,89 (O-$CH_2$-O), 90,34 (O-$CH_2$-O) ppm.

Das Auftreten einer Vielzahl an Signalen im $^1H$-NMR-Spektrum im Bereich 4,5 bis 5,5 ppm, sowie einer Vielzahl an Signalen mit positiver Polarität im $^{13}C$ APT-NMR-Spektrum im Bereich 89,1 bis 96,5 ppm zeigt das Vorliegen chemisch nicht-äquivalenter Oxymethylen-Gruppen $(CH_2O)_n$ in einer nicht-alternierenden Art und Weise mit unterschiedlicher Kettenlängen. Insbesondere das Nicht-Alternieren konnte gut im 2D-NMR-Spektrum beobachtet werden.

Die durchschnittliche Summenformel beträgt laut $^1$H-NMR-Spektroskopie und dem durch die GPC ermittelten Molekulargewicht: $PO_{2,7}$-PET1110-$(CH_2O)_{0,39}$. Das Produkt enthält somit durchschnittlich 0,39 Oxymethylengruppen pro Molekül.

IR-Spektroskopie: ν = 3473,63 (br, OH); 2969,51; 2929,86; 2870,38; 1724,78 (vw); 1452,89; 1373,59; 1343,85; 1295,71; 1090,38; 1033,73; 923,28; 865,22; 640,07; 519,70; 446,06 $cm^{-1}$.

Das IR-Spektrum ist weder identisch mit dem IR-Spektrum von Paraformaldehyd, noch mit dem IR-Spektrum von PET-2. Das Auftreten einer Bande bei 926 $cm^{-1}$ weist auf das Vorliegen von Oxymethylen-Gruppen hin.

Sowohl die NMR- als auch die IR-spektroskopischen Daten belegen zweifelsfrei die Zusammensetzung des Produktes aus Polyetherpolyol mit statistischen Formaldehyd/Propylenoxid-Blöcken.

**Beispiel 8: Herstellung eines Polyoxyalkylen-Oxymethylen-Copolymers bei einer Temperatur von 50°C unter Einsatz einer Zinn-haltigen Verbindung als -Katalysator und eines DMC-Katalysators**

In R1 wurden 753,18 g (25,10 mol) Paraformaldehyd, 8,28 g (0,026 mol) 4-Dodecylbenzolsulfonsäure, 15,59 g (0,055 mol) Phosphorpentoxid und 103,3 g Paraffin vorgelegt. In R2 wurden 251,13 g PET-3, 1,22 g DMC-Katalysator vorgelegt. Der BPR wurde auf 1 bar Solldruck eingestellt und der Reaktor bei geöffnetem Gasauslass 10 min mit Argon gespült.

Anschließend wurde R2 mit einer Membranpumpe bei 50 mbar Pumpenvakuum evakuiert und der Reaktor auf 130 °C Innentemperatur geheizt. Nach Erreichen der Temperatur wurde die Evakuierung für 30 min fortgesetzt. Anschließend wurde die Verbindung zur Vakuumpumpe unterbrochen, der BPR auf 20 bar gesetzt und R2 bis Erreichen dieses Wertes mit $\dot{m}_{CFC2}$= 500 g/h $CO_2$ beschickt. Anschließend wurden unter Rühren bei 700 U/min mit $\dot{m}_{CFC3}$= 60 g/h 3 Pulse à 25 g (0,43 mol) Propylenoxid in R2 eingeleitet, wobei nach jedem Puls der Druckabfall durch Zudosierung von $CO_2$ ausgeglichen wurde, und vor jeder weiteren Zugabe von Propylenoxid abgewartet wurde, bis kein weiterer Druckabfall zu beobachten war. Nachdem die Reaktion des dritten Propylenoxid-Pulses abgeklungen war (kein weiterer Druckabfall zu beobachten), wurde der Druck in R2 mit $CO_2$ auf 20 bar eingestellt und kontinuierlich unter Rühren bei 700 U/min mit $\dot{m}_{CFC3}$= 60 g/h insgesamt 100 g (1,72 mol) Propylenoxid zudosiert. Nach Beendigung der Zugabe wurde R1 mit 10 bar $CO_2$ beaufschlagt und die Brücke zwischen R1 und R2 geöffnet. Der Massenstrom $\dot{m}_{in,R1}$ ($CO_2$) wurde auf 75 g/h eingestellt. Die Brücke wurde vor dem Absorber auf 145 °C, Absorber auf 175 °C und Überleitung zu R2 auf 140 °C, Gasauslass-Kapillare und BPR auf 140 °C geheizt. R2 wurde auf 50 °C Innentemperatur abgekühlt. Nach Erreichen der Temperatur wurde über die HPLC-Pumpe mit einer Flussrate von 5 ml/min eine Lösung von 7,72 g (0,012 mol) Dibutylzinndilaurat (DBTL) in 25 ml Dichlormethan in R2 eingeleitet.

Dann wurde R1 unter Rühren bei 100 U/min auf 120 °C Innentemperatur geheizt und nach Erreichen der Temperatur über 5 h gasförmiges Formaldehyd in R2 eingeleitet.

Anschließend wurde die $CO_2$-Zufuhr unterbrochen, die Brücke abgesperrt und R1 auf 25 °C abgekühlt. In R2 wurde unter Rühren bei 1000 U/min. Anschließend wurde der Druck abgelassen und R1 und R2 auf 25 °C gekühlt. Der Gewichtsverlust in R1 betrug 225,61 g. In R2 wurden 644,13 g eines gelb-braunen viskosen Öls mit farblosen festen Partikeln vorgefunden. Dieses wurde mit 100 ml Chloroform verdünnt und über einen Papierfilter filtriert. Nach Entfernen der flüchtigen Komponenten des Filtrates unter vermindertem Druck wurden 463,27 g eines klaren, gelben-braunen Öls erhalten.

Per thermogravimetrischer Analyse (TGA) wurden zwei Zersetzungsstufen ermittelt:

Stufe 1: Zersetzungstemperatur 156,63 °C, relativer Gewichtsverlust 35,09%

Stufe 2: Zersetzungstemperatur 301,04 °C, relativer Gewichtsverlust 38,87%

Per Gel-Permeations-Chromatographie (GPC) gegen Polystyrol-Standards wurde ein zahlenmittleres Molekulargewicht $M_n$ = 243,3 g/mol und ein Polydispersitätsindex PDI = 1,31 ermittelt.

OH-Zahl: 52,6 $mg_{KOH}$/g. Hieraus ergibt sich ein durchschnittliches Molekulargewicht M.W. = 295 g/mol. ESI-MS: $M_n$ 592 g/mol und PDI 1,12

$^1$H-NMR-Spektroskopie (400 MHz, DMSO-$d_6$): δ = 0,82-1,14 (m, 3 H, PO-$CH_3$/ PET-3-$CH_3$); 1,15-1,309 (m, 0,249 H, PO-$CH_3$/ PET-3-$CH_3$); 3,064-3,62 (m, 2,945 H, PO-CH/PO-$CH_2$/PET-3-$CH_2$/ PET-3-CH), 3,63-3,8 (m, 0,438 H, PO-CH/PO-$CH_2$/PET-3-$CH_2$/ PET-3-CH), 4,3-4,595 (m, 0,68 H, $OCH_2O$) ppm.

Die durchschnittliche Summenformel beträgt laut 1H-NMR-Spektroskopie $PO_{5,16}$-PET-3-$(CH_2O)_{2,57}$ Das Produkt enthält somit durchschnittlich 2,57 Oxymethylengruppen pro Molekül.

$^{13}$C-APT-NMR-Spektroskopie (100 MHz, DMSO-$d^6$): δ = 16,29 (-); 17,11 (-); 17,26 (-); 19,67 (-); 19,83 (-); 20,02 (-); 20,18 (-); 38,84 (+); 39,45 (+); 40,13 (+); 47,01 (+); 63,59 (+); 63,87 (-); 64,45 (+); 64,89 (+); 64,966 (-); 65,09 (-); 65,24 (-); 65,36 (-); 67,15 (-); 67,23 (+); 68,57 (+); 72,11 (+); 72,31 (+); 74,15 (-); 74,23 (-); 74,31 (-); 74,42 (+); 74,51 (+); 74,63 (+); 76,14 (-); 76,52 (+); 76,62 (+); 78,15 (+); 92,85 (+) ($OCH_2O$) ppm.

Das Auftreten einer Vielzahl an Signalen im $^1$H-NMR-Spektrum im Bereich 4,4 bis 5,2 ppm, sowie einer Vielzahl an Signalen mit positiver Polarität im $^{13}$C-APT-NMR-Spektrum im Bereich 84,3 bis 92,9 ppm zeigt das Vorliegen chemisch nicht-äquivalenter Oxymethylen-Gruppen in Blöcken $(CH_2O)_n$ mit unterschiedlicher Kettenlängen.

IR-Spektroskopie: $\nu$ = 3384, 42; 2970,92; 2929,86; 2873,21; 2337,94 (vw); 1721,95; 1611,49; 1454,31; 1375,01; 1332,53; 1264,55; 1083,30; 1049,31; 991,25; 967,18; 930,36; 836,90; 655,64; 522,53 $cm^{-1}$.

Das IR-Spektrum ist weder identisch mit dem IR-Spektrum von Paraformaldehyd, noch mit dem IR-Spektrum von PET-3. Die Bande bei 1721 $cm^{-1}$ zeigt die Anwesenheit von Polyethercarbonat-Blöcken. Das Auftreten einer Bande bei 930 $cm^{-1}$ weist auf das Vorliegen von Oxymethylen-Gruppen hin.

*Vergleich*

Beispiele 6 und 8 belegen, dass Zinn-Verbindungen auch in Kombinationen mit Doppelmetallcyanid-Katalysatoren für das erfindungsgemäße Verfahren eingesetzt werden können.

**Beispiel 9: Herstellung eines statistischen Polyoxyalkylen-Oxymethylen-Copolymers bei einer Temperatur von 85°C unter Einsatz einer Zinn-haltigen Verbindung als Katalysator in Gegenwart von Bi(2-EtHex)$_3$**

In R1 wurden 362,12 g (12,07 mol) Paraformaldehyd, 14,71 g (46 mmol) 4-Dodecylbenzolsulfonsäure, 9,23 g (33 mmol) Phosphorpentoxid und 150 g Paraffinöl vorgelegt. Das Gemisch wurde bei 100 U/min gerührt. In R2 wurden 309,38 g PET-2 (0,43 mol), 1,93 g (3 mmol) DBTL, und 2,18 g (3mmol) Bi(2-EtHex)3 vorgelegt. Das Gemisch wurde bei 1000 U/min gerührt. Der Nenndruck des BPR wurde auf P=20 bar eingestellt und das Gesamtsystem bei geöffneter Brücke über CFC1 mit $CO_2$ bis zum Nenndruck beaufschlagt. Die Brücke wurde vor dem Absorber auf 150 °C, Absorber auf 200 °C und Überleitung zu R2 auf 120 °C geheizt. Der Innenraum von R2 wurde auf 85 °C, die Gasauslass-Kapillare auf 120 °C und der BPR auf 150 °C geheizt.

Nach Erreichen des Nenndrucks und der Solltemperaturen für Brücke, R2, Gasauslass und BPR wurde der Innenraum von R1 auf 110 °C geheizt und über 24 h gasförmiges Formaldehyd in R2 eingeleitet. Das Trägergas wurde auf 150 g/h eingestellt und zusammen mit dem Systemdruck über die Reaktionszeit konstant gehalten. Während der Polymerisationsreaktion wurden 82,01 g (1,41 mol) Propylenoxid in R2 eingeleitet mit einer Flussrate von 40 g/h.

Nach 24 h wurde R1 abgekühlt und die Leitung geschlossen. Das Trägergas wurde auf $N_2$ gewechselt. Anschließend wurden 21 g (0,36 mol) Propylenoxid (40 g/h) in R2 vorgegeben. Im Anschluss wurde das Reaktionsgemisch in R2 bei 25 °C mit 1000 U/min 1 h nachgerührt und abgekühlt und der Überdrück abgelassen. Anschließend wurde 400 ml Wasser in R2 eingeleitet. Das Gemisch wurde 12 h nachgerührt. Der Überdruck wurde über den BPR abgelassen und das Reaktionsgemisch aus dem Reaktor entnommen.

Als Rohprodukt wurde eine viskose Flüssigkeit mit darin verteilten weißen Partikeln erhalten, welche mittels Druckfiltration entfernt wurden. Nach Aufarbeitung erhielt man ein leicht gelbes Öl.

Es sei angemerkt, dass bei dem während der Reaktion herrschenden $CO_2$-Partialdruck kein Einbau von $CO_2$ in die Polymerkette stattfand.
Viskosität: 437,4 mPa· s

Per thermogravimetrischer Analyse (TGA) wurde eine Zersetzungsstufe ermittelt:

Zersetzungstemperatur 356,16 °C (relativer Gewichtsverlust 95,42%)

Per Gel-Permeations-Chromatographie (GPC) gegen Polystyrol-Standards wurde ein zahlenmittleres Molekulargewicht $M_n$ = 972,4 g/mol und ein Polydispersitätsindex PDI = 1,06 ermittelt.

Die OH Zahl ist 161,28 mg KOH/g, die dem Molekulargewicht von 1043,53 g/mol entspricht.

$^1$H-NMR-Spektroskopie (400 MHz, $CDCl_3$): $\delta$ = 0,69-1,18 (m, 1,014 H, PO-$CH_3$ /PET-2-$CH_3$), 2,897-3,005 (m, 0,05 H, PO-CH/PO-$CH_2$/PET-2-$CH_2$/ PET-2-CH), 3,05-3,811 (m, 1,25 H, PO-CH/PO-$CH_2$/PET-2-$CH_2$/ PET-2-CH), 4,33-4,73 (m, 0,02 H, $OCH_2O$); 4,74-5,11 (m, 0,0085 H, $OCH_2O$) ppm.

$^{13}$C-CPD-NMR-Spektroskopie (100 MHz, $CDCl_3$): $\delta$ = 16,90; 17,89; 18,52; 65,45; 66,80; 71,21; 73,1; 73,73; 74,63; 74,98; 76,79 ($CDCl_3$), 77,50 ($CDCl_3$), 77,73($CDCl_3$), 78,31, 88,92 (O-$CH_2$-O), 89,55 (O-$CH_2$-O) ppm.

Das Auftreten einer Vielzahl an Signalen im $^1$H-NMR-Spektrum im Bereich 4,5 bis 5,5 ppm, sowie einer Vielzahl an Signalen mit positiver Polarität im $^{13}$C APT-NMR-Spektrum im Bereich 88,1 bis 96,5 ppm zeigt das Vorliegen chemisch nicht-äquivalenter Oxymethylen-Gruppen $(CH_2O)_n$ in einer nicht-alternierenden Art und Weise mit unterschiedlicher Kettenlängen. Insbesondere das Nicht-Alternieren konnte gut im 2D-NMR-Spektrum beobachtet werden.

Die durchschnittliche Summenformel beträgt laut $^1$H-NMR-Spektroskopie und dem durch die GPC ermittelten Molekulargewicht: $PO_{4,07}$-PET1110-$(CH_2O)_{0,5}$. Das Produkt enthält somit durchschnittlich 0,5 Oxymethylengruppen pro Molekül.

IR-Spektroskopie: v = 3473,63 (br, OH); 2969,51; 2929,86; 2870,38; 1724,78 (vw); 1452,89; 1373,59; 1343,85;

1295,71; 1090,38; 1033,73; 923,28; 865,22; 640,07; 519,70; 446,06 $cm^{-1}$.

Das IR-Spektrum ist weder identisch mit dem IR-Spektrum von Paraformaldehyd, noch mit dem IR-Spektrum von PET-2. Das Auftreten einer Bande bei 926 $cm^{-1}$ weist auf das Vorliegen von Oxymethylen-Gruppen hin.

Sowohl die NMR- als auch die IR-spektroskopischen Daten belegen zweifelsfrei die Zusammensetzung des Produktes aus Polyetherpolyol mit statistischen Formaldehyd/Propylenoxid-Blöcken.

**Beispiel 10 (Vergleichsbeispiel): Herstellung eines statistischen Polyoxyalkylen-Oxymethylen-Copolymers bei einer Temperatur von 100°C unter Einsatz einer Zinn-haltigen Verbindung als -Katalysator und eines DMC-Katalysators**

In R1 wurden 179,39 g (5,98 mol) Paraformaldehyd, 3,93 g (0,012 mol) 4-Dodecylbenzolsulfonsäure, 3,32 g (0,011 mol) Phosphorpentoxid und 101,09 g Paraffin vorgelegt. In R2 wurden 252,30 g PET-1 und 0,103 g DMC-Katalysator vorgelegt. Der BPR wurde auf 1 bar Solldruck eingestellt und der Reaktor bei geöffnetem Gasauslass 10 min mit Stickstoff gespült. Anschließend wurde R2 mit einer Membranpumpe bei 50 mbar Pumpenvakuum evakuiert und der Reaktor auf 130 °C Innentemperatur geheizt. Nach Erreichen der Temperatur wurde die Evakuierung für 30 min fortgesetzt. Anschließend wurde die Verbindung zur Vakuumpumpe unterbrochen, der BPR auf 20 bar gesetzt und R2 bis Erreichen dieses Wertes mit $\dot{m}_{CFC2}$= 500 g/h $CO_2$ beschickt. Anschließend wurden unter Rühren bei 700 U/min mit $\dot{m}_{CFC3}$= 60 g/h 3 Pulse à 25 g (0,43 mol) Propylenoxid in R2 eingeleitet, wobei nach jedem Puls der Druckabfall durch Zudosierung von $CO_2$ ausgeglichen wurde, und vor jeder weiteren Zugabe von Propylenoxid abgewartet wurde, bis kein weiterer Druckabfall zu beobachten war. Nachdem die Reaktion des dritten Propylenoxid-Pulses abgeklungen war (kein weiterer Druckabfall zu beobachten), wurde der Druck in R2 mit $CO_2$ auf 20 bar eingestellt und die Innentemperatur in R2 auf 100 °C reduziert. Die Brücke wurde vor dem Absorber auf 140 °C, Absorber und Überleitung zu R2 auf 120 °C, Gasauslass-Kapillare auf 60 °C und BPR auf 140 °C geheizt. Dann wurde R1 mit $\dot{m}_{in,R1}$= 500 g/h $CO_2$ auf einen Druck von 20,5 bar beaufschlagt. Nach Erreichen des Drucks wurde der Massenstrom $\dot{m}_{in,R1}$ auf 300 g/h reduziert, die Brücke zwischen R1 und R2 geöffnet und R1 unter Rühren bei 200 U/min auf 125 °C Innentemperatur beheizt.

Unter Rühren bei 1000 U/min wurde nun über 2 Stunden gasförmiges Formaldehyd in R2 eingeleitet.

Anschließend wurde die $CO_2$-Zufuhr unterbrochen, die Brücke abgesperrt und R1 auf 25 °C abgekühlt. In R2 wurden bei 100 °C mit $\dot{m}_{CFC3}$=60 g/h insgesamt 25 g (0,43 mol) Propylenoxid eingeleitet. Nach Beendigung der Zugabe wurde das Reaktionsgemisch bei 100°C 18 Stunden mit 400 U/min nachgerührt. Anschließend wurde der Druck in R2 abgelassen. Der Gewichtsverlust in R1 während der Reaktion betrug 42,97 g, die Gewichtszunahme in R2 insgesamt 111,16g. Abzüglich des zudosierten Propylenoxids ergibt dies einen Formaldehyd-Eintrag von 11,16 g (0,37 mol) Formaldehyd. In R2 wurde ein schwach rosa gefärbtes Öl mit farblosen festen Partikeln vorgefunden. Dieses wurde mit 100 ml Chloroform verdünnt und über einen Papierfilter filtriert. Nach Entfernen der flüchtigen Komponenten des Filtrates unter vermindertem Druck wurden 335,75 g eines klaren, schwach rosa gefärbten Öls erhalten.

Per Gel-Permeations-Chromatographie (GPC) gegen Polystyrol-Standards wurde ein zahlenmittleres Molekulargewicht $M_n$ = 1282 g/mol und ein Polydispersitätsindex PDI = 1,17 ermittelt.

OH-Zahl: 80,6 $mg_{KOH}$/g. Hieraus ergibt sich ein durchschnittliches Molekulargewicht von 1390 g/mol.

$^{1}$H-NMR-Spektroskopie (400 MHz, $CDCl_3$): $\delta$ = 0,91-0,97 (m, 0,53 H), 0,98-1,20 (m, 97,13 H, PE-$CH_3$), 1,20-1,31 (m, 3,37 H, PEC-$CH_3$), 1,46 (d, *J* = 6,2 Hz, 4,83 H, cPC-$CH_3$), 2,27 (s, 1,00 H), 3,07-3,94 (m, 101,33 H, PE-CH/PE-$CH_2$/PEC-$CH_2$), 3,99 (t, *J* = 7,7 Hz, 1,65 H, cPC-$CH_2$), 4,52 (t, *J* = 7,7 Hz, 1,50 H, cPC-$CH_2$), 4,65-4,91 (m, 3,85 H, $OCH_2O$/PEC-CH/cPC-CH), 5,12 (s, 1,47 H, $OCH_2O$ ppm.

Laut $^{1}$H-NMR-Spektroskopie beträgt das Verhältnis PE : PEC : ($CH_2O$ im Produkt 28,91 : 1,00 : 1,16. Bei einem Molekulargewicht von 1390 g/mol (bestimmt über die OH-Zahl) ergibt das eine durchschnittliche Summenformel HO-$PE_{21,97}$-$PEC_{0,76}$-$(CH_2O)_{0,88}$-H.

Im Produktgemisch sind somit Polyethercarbonat-Oxymethylen-Copolymere enthalten.

$^{13}$C-APT-NMR-Spektroskopie (100 MHz, $CDCl_3$): $\delta$ = 16,4 (-), 16,5 (-),16,6 (-), 17,3 (-), 17,4 (-), 17,7 (-), 17,9 (-), 18,2 (-), 18,5 (-), 64,7 (-), 65,2 (-), 65,9 (-), 69,7 (+), 72,1 (+), 72,4 (+), 72,6 (-), 72,8 (+), 73,0 (+), 73,7 (+), 73,8 (+), 73,9 (-), 74,0 (-), 74,1 (-), 74,2 (-), 74,4 (-), 74,5 (-), 74,6 (+), 74,7 (+), 74,9 (+), 75,0 (+), 75,3 (-), 75,4 (-), 76,3 (+), 76,4 (+), 88,9 (+, O-$CH_2$-O), 89,5 (+, O-$CH_2$-O), 90,9 (+, O-$CH_2$-O), 90,9 (+, O-$CH_2$-O), 91,0 (+, O-$CH_2$-O), 92,5 (+, O-$CH_2$-O), 93,3 (+, O-$CH_2$-O), 93,5 (+, O-$CH_2$-O), 153,8 (+, C=O, PEC), 153,9 (+, C=O, PEC) ppm.

Das Auftreten einer Vielzahl an Signalen im $^{1}$H-NMR-Spektrum im Bereich 4,2 bis 5,7 ppm, sowie einer Vielzahl an Signalen mit positiver Polarität im $^{13}$C-APT-NMR-Spektrum im Bereich 85,3 bis 92,6 ppm zeigt das Vorliegen chemisch nicht-äquivalenter Oxymethylen-Gruppen in Blöcken $(CH_2O)_n$ mit unterschiedlicher Kettenlängen. Das Auftreten von Carbonat-Signalen im $^{13}$C-APT-NMR-Spektrum bei 153,8 bzw. 153,9 ppm zeigt das Vorliegen von Polyethercarbonat-Einheiten.

IR-Spektroskopie: ν = 3484 (b, w ν[OH]), 2970 (vw), 2930 (w), 2896 (w), 2869 (w), 1804 (m, ν[C=O; cPC]), 1743 (w, ν[C=O]; PEC), 1451 (w), 1373 (w), 1345 (m), 1297 (vw), 1262 (w), 1093 (s), 967 (vw), 926 (w), 839 (vw), 775 (vw), 712 (vw), 662 (vw), 638 (vw), 524 (vw) $cm^{-1}$.

Das IR-Spektrum ist weder identisch mit dem IR-Spektrum von Paraformaldehyd, noch mit dem IR-Spektrum von PET-1. Die Bande bei 1743 $cm^{-1}$ zeigt die Anwesenheit von Polyethercarbonat-Blöcken. Das Auftreten einer Bande bei 967 $cm^{-1}$ weist auf das Vorliegen von Oxymethylen-Einheiten hin.

**Beispiel 11 (Vergleichsbeispiel): Herstellung eines statistischen Polyoxyalkylen-Oxymethylen-Copolymers bei einer Temperatur von 100°C unter Einsatz eines DMC-Katalysators**

In R1 wurden 169,41 g (5,65 mol) Paraformaldehyd, 4,00 g (0,012 mol) 4-Dodecylbenzolsulfonsäure, 3,31 g (0,011 mol) Phosphorpentoxid und 103,41 g Paraffin vorgelegt. In R2 wurden 251,00 g PET-1 und 0,157 g DMC-Katalysator vorgelegt. Der BPR wurde auf 1 bar Solldruck eingestellt und der Reaktor bei geöffnetem Gasauslass 10 min mit Stickstoff gespült. Anschließend wurde R2 mit einer Membranpumpe bei 50 mbar Pumpenvakuum evakuiert und der Reaktor auf 130 °C Innentemperatur geheizt. Nach Erreichen der Temperatur wurde die Evakuierung für 30 min fortgesetzt. Anschließend wurde die Verbindung zur Vakuumpumpe unterbrochen, der BPR auf 20 bar gesetzt und R2 bis Erreichen dieses Wertes mit $\dot{m}_{CFC2}$= 500 g/h $CO_2$ beschickt. Anschließend wurden unter Rühren bei 1000 U/min mit $\dot{m}_{CFC3}$ = 60 g/h 3 Pulse à 25 g (0,43 mol) Propylenoxid in R2 eingeleitet, wobei nach jedem Puls der Druckabfall durch Zudosierung von $CO_2$ ausgeglichen wurde, und vor jeder weiteren Zugabe von Propylenoxid abgewartet wurde, bis kein weiterer Druckabfall zu beobachten war. Nachdem die Reaktion des dritten Propylenoxid-Pulses abgeklungen war (kein weiterer Druckabfall zu beobachten), wurde der Druck in R2 mit $CO_2$ auf 20 bar eingestellt und die Innentemperatur in R2 auf 100 °C reduziert. Die Brücke wurde vor dem Absorber auf 140 °C, Absorber und Überleitung zu R2 auf 120 °C, Gasauslass-Kapillare auf 60 °C und BPR auf 140 °C geheizt. Dann wurde R1 mit $\dot{m}_{in,R1}$ = 500 g/h $CO_2$ auf einen Druck von 20,5 bar beaufschlagt. Nach Erreichen des Drucks wurde Massenstrom $\dot{m}_{in,R1}$ auf 300 g/h reduziert, die Brücke zwischen R1 und R2 geöffnet und R1 unter Rühren bei 200 U/min auf 125 °C Innentemperatur beheizt.

Unter Rühren bei 1000 U/min wurde nun über 2 Stunden gasförmiges Formaldehyd in R2 eingeleitet.

Anschließend wurde die $CO_2$-Zufuhr unterbrochen, die Brücke abgesperrt und R1 auf 25 °C abgekühlt. In R2 wurden bei 100 °C mit $\dot{m}_{CFC3}$ = 60 g/h insgesamt 25 g (0,43 mol) Propylenoxid eingeleitet. Nach Beendigung der Zugabe wurde das Reaktionsgemisch bei 100 °C 18 Stunden nachgerührt. Anschließend wurde der Druck in R2 abgelassen. Der Gewichtsverlust in R1 während der Reaktion betrug 43,51 g, die Gewichtszunahme in R2 insgesamt 113,18 g. Abzüglich des zudosierten Propylenoxids ergibt dies einen Formaldehyd-Eintrag von 13,8 g (0,46 mol) Formaldehyd. In R2 wurde ein schwach rosa gefärbtes Öl mit farblosen festen Partikeln vorgefunden. Dieses wurde mit 100 ml Chloroform verdünnt und über einen Papierfilter filtriert. Nach Entfernen der flüchtigen Komponenten des Filtrates unter vermindertem Druck wurden 345,63 g eines klaren, schwach rosa gefärbten Öls erhalten.

Per Gel-Permeations-Chromatographie (GPC) gegen Polystyrol-Standards wurde ein zahlenmittleres Molekulargewicht $M_n$ = 1453 g/mol und ein Polydispersitätsindex PDI = 1,12 ermittelt.

OH-Zahl: 80,2 mg KOH/g. Hieraus ergibt sich ein zahlenmittleres Molekulargewicht von 1397 g/mol.

$^1$H-NMR-Spektroskopie (400 MHz, $CDCl_3$): $\delta$ = 0,90-0,99 (m, 0,43 H), 0,99-1,22 (m, 57,66 H, PE-$CH_3$), 0,1,22-1,39 (m, 3,95 H, PEC-$CH_3$), 1,46 (d, *J* = 6,3 Hz, 1,11 H, cPC-$CH_3$), 2,34-2,40 (m, 0,39 H), 2,65-2,72 (m, 0,40 H), 2,88-2,99 (m, 0,52 H), 3,07-3,96 (m, 61,50 H, PE-CH/PE-$CH_2$/PEC-$CH_2$), 4,01 (t, *J* = 7,5 Hz, 0,44 H, cPC-$CH_2$), 4,57 (t, *J* = 8,1 Hz, 0,26 H, cPC-$CH_2$), 4,66-4,78 (m, 0,51 H, $OCH_2O$) 4,78-4,94 (m, 1,52 H, $OCH_2O$/PEC-CH/cPC-CH), 5,01-5,08 (m, 0,15 H, $OCH_2O$) 5,11 (s, 1,00 H, $OCH_2O$) ppm.

Laut $^1$H-NMR-Spektroskopie beträgt das Verhältnis PE : PEC : ($CH_2O$) im Produkt 25,63 : 1,76 : 1,00. Bei einem Molekulargewicht von 1397 g/mol (bestimmt über die OH-Zahl) ergibt das eine durchschnittliche Summenformel HO-$PE_{22,55}$-$PEC_{1,55}$-$(CH_2O)_{0,88}$-H.

Im Produktgemisch sind somit Polyethercarbonat-Oxymethylen-Copolymere enthalten.

$^{13}$C-APT-NMR-Spektroskopie (100 MHz, $CDCl_3$): $\delta$ = 16,3 (-), 16,4 (-),16,6 (-), 16,7 (-), 17,3 (-), 17,5 (-), 17,8 (-), 17,9 (-), 18,2 (-), 18,6 (-), 46,8 (+), 47,0 (-), 64,7 (-), 64,8 (-), 66,0 (-), 66,0 (-), 69,7 (+), 72,2 (+), 72,5 (+), 72,8 (-), 73,1 (+), 73,9 (+), 73,9 (+), 74,2 (-), 74,3 (-), 74,4 (-), 74,6 (-), 74,7 (+), 74,9 (+), 75,0 (+), 75,1 (+), 75,4 (-), 75,5 (-), 76,3 (+), 76,5 (+), 85,3 (+, O-$CH_2$-O), 86,1 (+, O-$CH_2$-O), 86,7 (+, O-$CH_2$-O), 86,8 (+, O-$CH_2$-O), 88,3 (+, O-$CH_2$-O), 88,8 (+, O-$CH_2$-O), 89,2 (+, O-$CH_2$-O), 89,8 (+, O-$CH_2$-O), 90,5 (+, O-$CH_2$-O), 92,6 (+, O-$CH_2$-O), 153,8 (+, C=O, PEC), 153,9 (+, C=O, PEC) ppm.

Das Auftreten einer Vielzahl an Signalen im $^1$H-NMR-Spektrum im Bereich 4,2 bis 5,7 ppm, sowie einer Vielzahl an Signalen mit positiver Polarität im $^{13}$C-APT-NMR-Spektrum im Bereich 85,3 bis 92,6 ppm zeigt das Vorliegen chemisch nicht-äquivalenter Oxymethylen-Gruppen in Blöcken $(CH_2O)_n$ mit unterschiedlicher Kettenlängen. Das Auftreten von Carbonat-Signalen im $^{13}$C-APT-NMR-Spektrum bei 153,8 bzw. 153,9 ppm zeigt das Vorliegen von Polyethercarbonat-Einheiten.

IR-Spektroskopie: ν = 3466 (b, w ν[OH]), 2969 (vw), 2930 (w), 2869 (w), 1813 (m, ν[C=O; cPC]), 1743 (w, ν[C=O]; PEC), 1451 (w), 1372 (w), 1343 (m), 1296 (vw), 1262 (w), 1094 (s), 1014 (w), 968 (vw), 925 (w), 863 (w), 825 (vw) $cm^{-1}$.

Das IR-Spektrum ist weder identisch mit dem IR-Spektrum von Paraformaldehyd, noch mit dem IR-Spektrum

von PET-1. Die Bande bei 1743 $cm^{-1}$ zeigt die Anwesenheit von Polyethercarbonat-Blöcken. Das Auftreten einer Bande bei 968 $cm^{-1}$ weist auf das Vorliegen von Oxymethylen-Einheiten hin.

**Vergleich**

Die nachfolgende Tabelle gibt einen Vergleich der Resultate aus den Beispielen 1 bis 9 und den Vergleichsbeispielen 10 und 11 wider.

| Beispiel Nr. | Temp. in R2 [°C] * | Neu eingebaute ($CH_2O$)-Gruppe laut durchschnittlicher Summenformel | Neu eingebaute Propylenoxid-Gruppen laut durchschnittlicher Summenformel | Verhältnis Propylenoxid-Gruppen zu ($CH_2O$)-Gruppen ** |
|---|---|---|---|---|
| 7 | 40 | 0,39 | 2,7 | 6,92 |
| 8 | 50 | 2,6 | 5,2 | 2,00 |
| 1 | 60 | 3,7 | 27,2 | 7,35 |
| 2 | 60 | 7,6 | 19,9 | 2,61 |
| 3 | 60 | 5,9 | 23,5 | 4,00 |
| 4 | 60 | 4,8 | 32,2 | 6,71 |
| 5 | 60 | 5,8 | 15,8 | 2,72 |
| 6 | 60 | 4,3 | 28,9 | 6,73 |
| 9 | 85 | 0,5 | 4,1 | 8,2 |
| 10 (Vgl.) | 100 | 0,88 | 22,0 | 24,96 |
| 11 (Vgl.) | 100 | 0,88 | 22,6 | 25,62 |

*) angegeben ist die Temperatur während der Reaktion mit Formaldehyd durchgeführt wurde
**) molares Verhältnis von aus dem Alkylenoxid während der Reaktion einpolymerisierten Alkylenoxidgruppen zu aus dem Formaldehyd während der Reaktion einpolymerisierten Oxymethylengruppen

Man erkennt, dass innerhalb des erfindungsgemäßen Temperaturbereichs ($T \leq 90°C$, Beispiele 1 bis 9) relativ zu Propylenoxid deutlich mehr Formaldehyd in die Polymerkette eingebaut wird (Verhältnis ≤ 8,2). Oberhalb der erfindungsgemäß zu verwendenden Reaktionstemperatur (T = 100°C, Vergleichsbeispiele 10 und 11) verschiebt sich das Verhältnis von eingebauten Propylenoxid-Gruppen zu eingebauten Formaldehyd-Gruppen stark in Richtung Propylenoxid-Gruppen (Verhältnis > 24,96).

**Beispiel 12: Herstellung eines Polyurethans unter Einsatz des Polyoxyalkylen-Oxymethylen-Copolymers aus Beispiel 1**

Zur Herstellung eines Weichschaums wurden in einer Metalldose 9.95 g (0.0142 eq) des Polyols gemäß Polyol Beispiel-1, 0.06 g ($1.48 \cdot 10^{-4}$ eq), Zinn(II)octanoat, 0.33 g (0.037 eq) Wasser und 0.22 g des Schaumadditivs B8239 miteinander vermischt. Diese Mischung wurde bei 1400 U/min für 30 Sekunden gerührt. Anschließend fügte man 6.91 g (0.079 eq) 2,4-Toluylendiisocyanat (2,4-TDI) hinzu und rührte weiter. Die Schaumbildung setzte unmittelbar ein und erreichte nach 5 Minuten die maximale Höhe.

**Beispiel 13: Herstellung eines Polyurethans unter Einsatz des Polyoxyalkylen-Oxymethylen-Copolymers aus Beispiel 7**

Zur Herstellung eines Weichschaums wurden in einer Metalldose 9.92 g (0.028 eq) des Polyols gemäß Polyol Beispiel-7, 0.1 g ($2.47 \cdot 10^{-4}$ eq), Zinn(II)octanoat, 0.58 g (0.064 eq) Wasser und 0.70 g des Schaumadditivs B8239 miteinander vermischt. Diese Mischung wurde bei 1400 U/min für 30 Sekunden gerührt. Anschließend fügte man 11.18 g (0.128 eq) 2,4-Toluylendiisocyanat (2,4-TDI) hinzu und rührte weiter. Die Schaumbildung setzte unmittelbar ein und erreichte nach 5 Minuten die maximale Höhe.

**Patentansprüche**

1. Verfahren zur Herstellung von Polyoxyalkylen-Oxymethylen-Copolymeren, umfassend den Schritt der Polymerisation von Formaldehyd und eines Alkylenoxids in Gegenwart einer Starterverbindung mit Zerewitinoff-aktiven H-Atomen und eines Katalysators,
**dadurch gekennzeichnet, dass**
die Polymerisation bei einer Temperatur zwischen > 40 °C und ≤ 90 °C durchgeführt wird.

2. Verfahren gemäß Anspruch 1, wobei der Katalysator eine Zinn-haltige Verbindung, eine Bismut-haltige Verbindung und/oder einen Doppelmetallcyanid-Katalysator umfasst.

3. Verfahren gemäß Anspruch 1 oder 2, wobei als Katalysator eine Bismut-haltige Verbindung, eine Mischung aus einer einer Bismut-haltigen Verbindung und einer Zinn-haltigen Verbindung oder eine Mischung aus einer Zinn-haltigen Verbindung und einem Doppelmetallcyanidkatalysator eingesetzt wird.

4. Verfahren gemäß einem der Ansprüche 1 bis 3, wobei als Alkylenoxid Ethylenoxid, Propylenoxid und/oder Styroloxid eingesetzt wird.

5. Verfahren gemäß einem oder mehreren der Ansprüche 1 bis 4, wobei das Formaldehyd zusammen mit Kohlendioxid mit einem $CO_2$-Partialdruc von ≥ 1 bar bis ≤ 50 bar in das Reaktionsgemisch dosiert wird.

6. Verfahren gemäß einem der Ansprüche 1 bis 5, wobei nach Ablauf einer vorbestimmten Reaktionsdauer eine wässrige Lösung eines Thiosulfat-Salzes hinzugefügt wird.

7. Verfahren gemäß einem der Ansprüche 1 bis 6, wobei die Starterverbindung ein zahlenmittleres Molekulargewicht von ≥ 76 g/mol bis ≤ 3000 g/mol aufweist.

8. Verfahren gemäß einem oder mehreren der Ansprüche 1 bis 7, wobei die Starterverbindung ausgewählt ist aus der Gruppe der Polyetherpolyole, Polyethercarbonatpolyole, Polyesterpolyole, Polyetheresterpolyole, Polycarbonatpolyole und/oder Polyacrylatpolyole.

9. Verfahren gemäß einem oder mehreren der Ansprüche 1 bis 8, wobei das Formaldehyd als gasförmiges Formaldehyd in das Reaktionsgefäß eingetragen wird.

10. Verfahren gemäß einem oder mehreren der Ansprüche 1 bis 9, wobei das Formaldehyd und Alkylenoxid während der Polymerisation zeitgleich in das Reaktionsgemisch dosiert werden.

11. Polyoxyalkylen-Oxymethylen-Copolymer, erhältlich durch ein Verfahren gemäß einem oder mehreren der Ansprüche 1 bis 10, mit einem molaren Verhältnis von aus dem Alkylenoxid während der Reaktion einpolymerisierten Alkylenoxidgruppen zu aus dem Formaldehyd während der Reaktion einpolymerisierten Oxymethylengruppen, bestimmt aus den durch $^1$H-NMR-Spektroskopie ermittelten durchschnittlichen Summenformeln, von ≥1:1 bis ≤ 10:1.

12. Polyoxyalkylen-Oxymethylen-Copolymer gemäß Anspruch 11 mit einer Viskosität bei 20 °C, bestimmt mittels eines Rheometers mit einer Kegel-Platte-Konfiguration mit einem Abstand von 50 μm zwischen Kegel und Platte und einer Scherrate von 0,01 bis 1000/s, von ≥ 500 mPas bis ≤ 2000 mPas.

13. Polyoxyalkylen-Oxymethylen-Copolymer gemäß Anspruch 11 oder 12 mit einer OH-Zahl, bestimmt mittels DIN 53240-2 mit *N*-Methylpyrrolidon als Lösungsmittel, von ≥ 40 mg KOH/g bis ≤ 300 mg KOH/g.

14. Polyoxyalkylen-Oxymethylen-Copolymer gemäß einem oder mehreren der Ansprüche 11 bis 13 mit einem durch Thermogravimetrie bestimmten relativen Gewichtsverlust von ≤ 15 Gewichts-% bei einer Temperatur von 300 °C.

15. Polyurethanpolymer, erhältlich durch Reaktion eines Polyoxyalkylen-Oxymethylen-Copolymers gemäß einem oder mehreren der Anspruche 11 bis 14 mit einem Polyisocyanat.

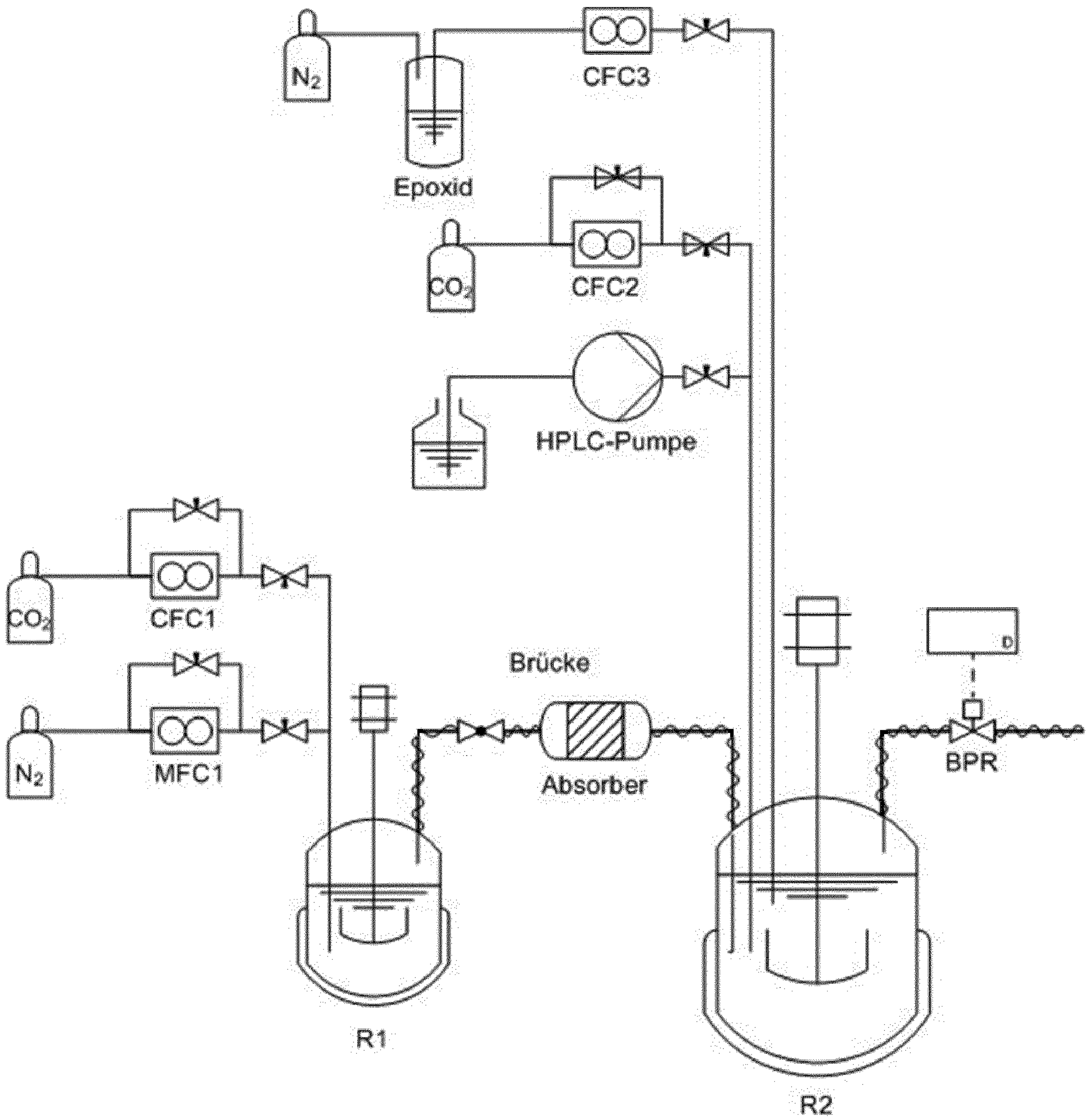
N2
Epoxid
CFC3
CO2
CFC2
HPLC-Pumpe
CO2
CFC1
N2
MFC1
Brücke
Absorber
BPR
R1
R2

FIG. 1

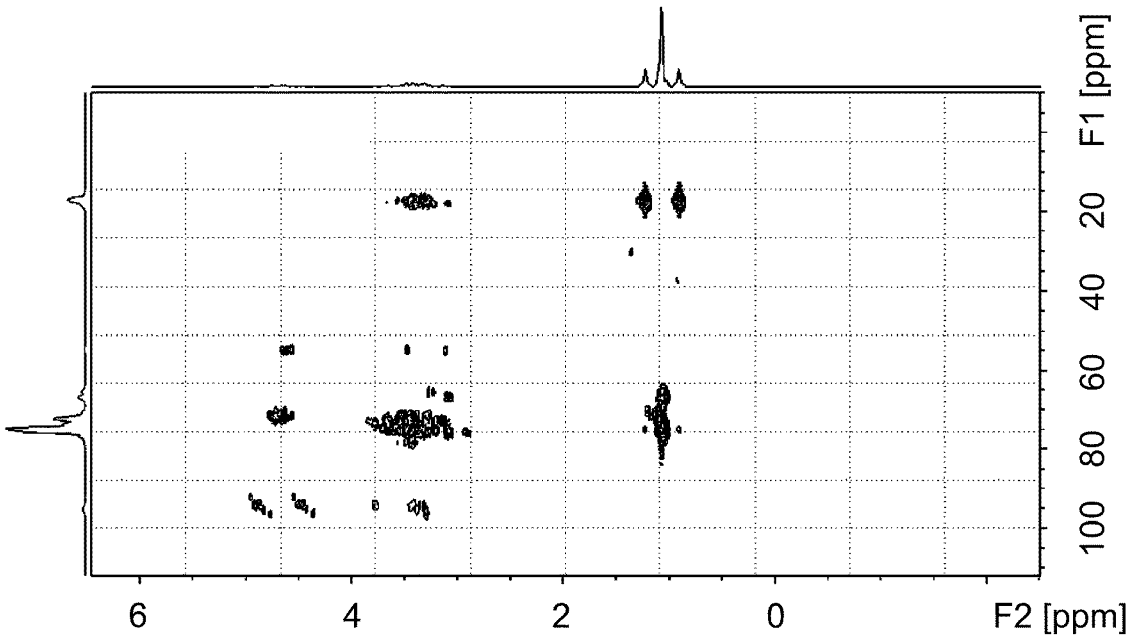
F1 [ppm]
20
40
60
80
100
6
4
2
0
F2 [ppm]

FIG. 2

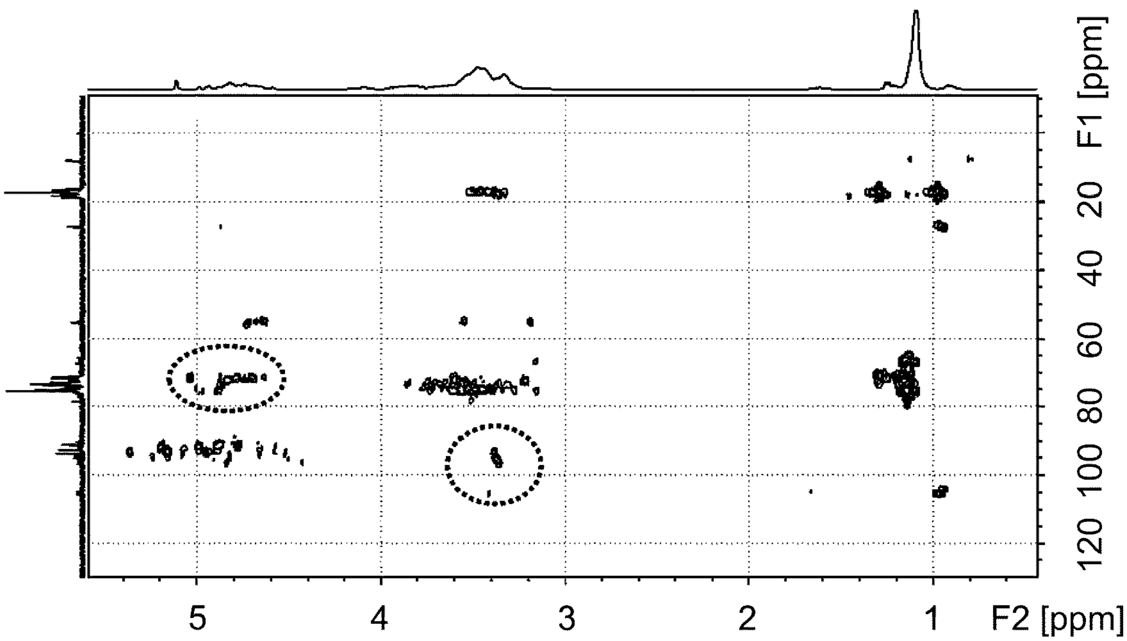
F1 [ppm]
20
40
60
80
100
120
5
4
3
2
1
F2 [ppm]

FIG. 3

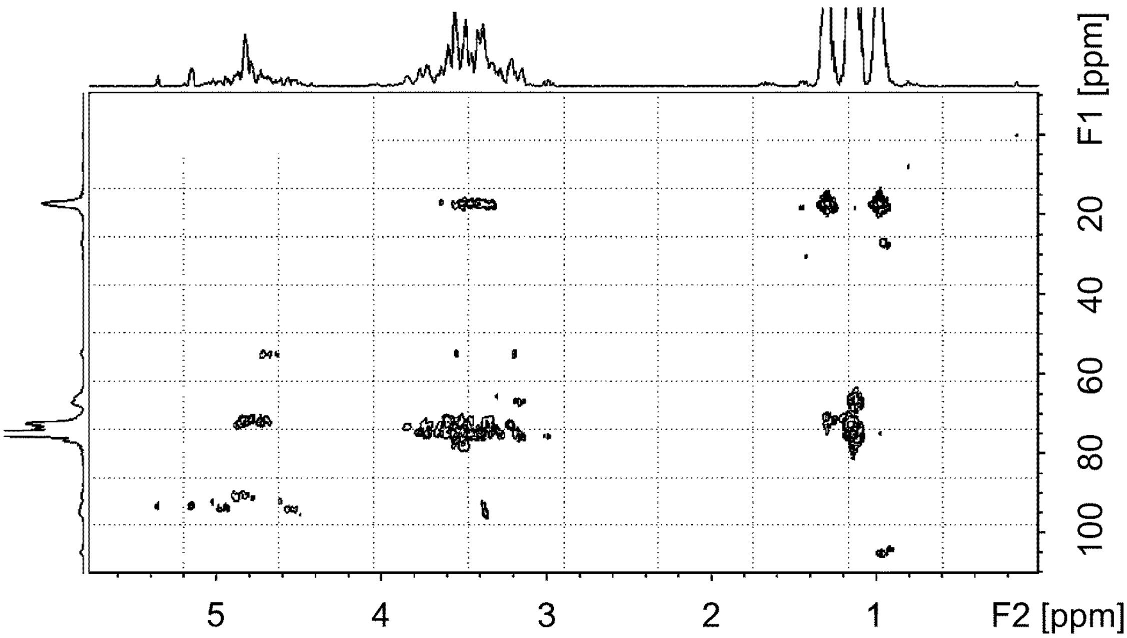
F1 [ppm]
20
40
60
80
100
5
4
3
2
1
F2 [ppm]

FIG. 4

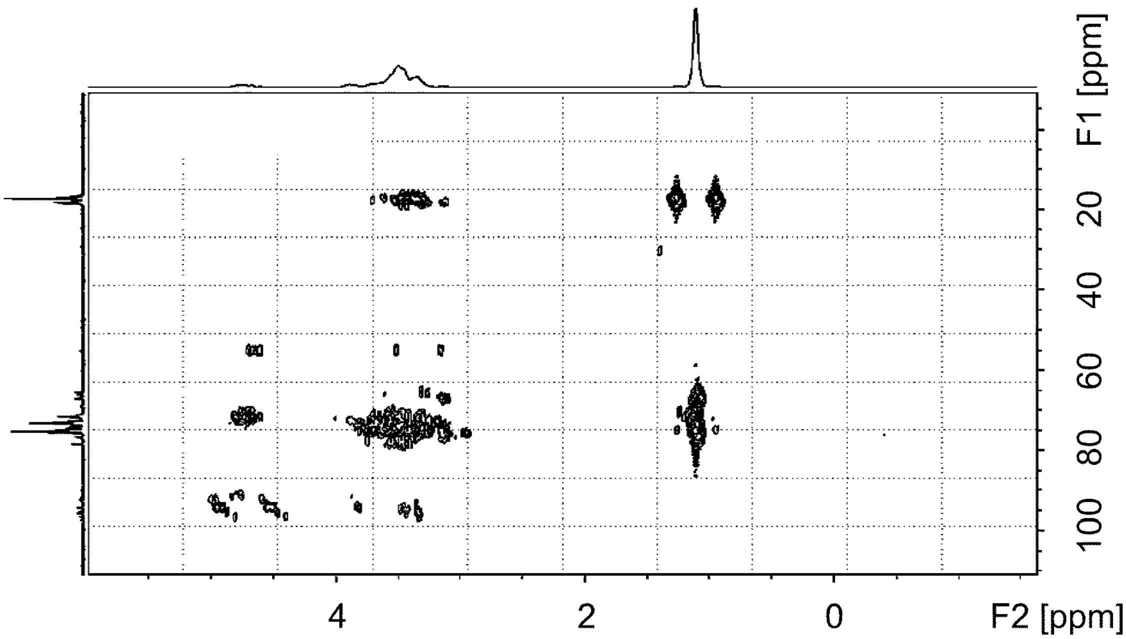
F1 [ppm]
20
40
60
80
100
4
2
0
F2 [ppm]

FIG. 5

Europäisches Patentamt
European Patent Office
Office européen des brevets

## EUROPÄISCHER RECHERCHENBERICHT

Nummer der Anmeldung
EP 16 19 4873

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | US 4 399 272 A (SAKURAI HISAYA [JP] ET AL) 16. August 1983 (1983-08-16)<br>* Zusammenfassung *<br>* Spalte 15; Ansprüche 1-6 *<br>* Spalte 11; Beispiele 1,3 *<br>* Spalte 17; Ansprüche 20-21 *<br>----- | 1-10<br>11-14 | INV.<br>C08G2/22<br>C08G2/08<br>C08G2/38<br>C08G2/06<br>C08G18/56<br>C08G18/76<br>C08G65/26 |
| X,D<br>A | WO 2014/095679 A1 (BAYER MATERIALSCIENCE AG [DE]) 26. Juni 2014 (2014-06-26)<br>* Seite 12, Zeile 29 - Seite 13, Zeile 3 *<br>* Seite 16 - Seite 17; Beispiel 1 *<br>* Zusammenfassung *<br>----- | 11-15<br>1-10 | |
| A | WO 2014/198689 A1 (BAYER MATERIALSCIENCE AG [DE]) 18. Dezember 2014 (2014-12-18)<br>* Zusammenfassung *<br>* Ansprüche 11-14 *<br>* Seite 27, Zeile 6 - Zeile 10 *<br>----- | 1-15 | RECHERCHIERTE SACHGEBIETE (IPC)<br>C08G |

Der vorliegende Recherchenbericht wurde für alle Patentansprüche erstellt

2

| Recherchenort | Abschlußdatum der Recherche | Prüfer |
|---|---|---|
| München | 16. März 2017 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 16 19 4873

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-03-2017

| Im Recherchenbericht angeführtes Patentdokument | Datum der Veröffentlichung | Mitglied(er) der Patentfamilie | Datum der Veröffentlichung |
|---|---|---|---|
| US 4399272 A | 16-08-1983 | DE 3042020 A1 | 03-09-1981 |
| | | NL 8006212 A | 16-06-1981 |
| | | US 4399272 A | 16-08-1983 |
| WO 2014095679 A1 | 26-06-2014 | CN 104918974 A | 16-09-2015 |
| | | EP 2935387 A1 | 28-10-2015 |
| | | KR 20150099540 A | 31-08-2015 |
| | | SG 11201503887R A | 30-07-2015 |
| | | US 2015322213 A1 | 12-11-2015 |
| | | WO 2014095679 A1 | 26-06-2014 |
| WO 2014198689 A1 | 18-12-2014 | CN 105408377 A | 16-03-2016 |
| | | EP 3008100 A1 | 20-04-2016 |
| | | JP 2016521788 A | 25-07-2016 |
| | | KR 20160018546 A | 17-02-2016 |
| | | SG 11201509857P A | 30-12-2015 |
| | | US 2016130407 A1 | 12-05-2016 |
| | | WO 2014198689 A1 | 18-12-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2014095679 A1
- WO 2014095861 A2
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- WO 0180994 A